(19) Europäisches Patentamt
European Patent Office
Office européen des brevets

(11) **EP 4 462 823 A1**

(12) **EUROPEAN PATENT APPLICATION**
published in accordance with Art. 153(4) EPC

(43) Date of publication:
**13.11.2024 Bulletin 2024/46**

(51) International Patent Classification (IPC):
***H04S 7/00*** *(2006.01)*

(21) Application number: **23854095.9**

(86) International application number:
**PCT/CN2023/102794**

(22) Date of filing: **27.06.2023**

(87) International publication number:
**WO 2024/037190 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 CN 202211001656**

(71) Applicant: **Honor Device Co., Ltd.**
**Shenzhen, Guangdong 518040 (CN)**

(72) Inventor: **CHEN, Shaotian**
**Shenzhen, Guangdong 518040 (CN)**

(74) Representative: **Gill Jennings & Every LLP**
**The Broadgate Tower**
**20 Primrose Street**
**London EC2A 2ES (GB)**

(54) **AUDIO PROCESSING METHOD AND APPARATUS**

(57) Embodiments of this application provide an audio processing method and apparatus, and relate to the field of terminal technologies. The method includes: displaying, by the terminal device, a first interface, where receiving, by the terminal device, a first operation for a first control in the plurality of controls; obtaining, by the terminal device, a first target parameter corresponding to the first control in response to the first operation, where the first target parameter includes one or more of the following: an interaural time difference, an interaural level difference, or an inter-aural coherence; obtaining, by the terminal device, a first audio signal; processing, by the terminal device, the first audio signal by using the first target parameter to obtain a second audio signal; and sending, by the terminal device, the second audio signal to the headset. In this way, the terminal device may match a suitable target parameter based on a head feature selected by a user, so that an audio signal outputted through the target parameter may adapt to the head feature of the user to implement personalized processing of the audio signal, and the user obtains a good audio listening experience.

FIG. 5

## Description

This application claims priority to Chinese Patent Application No. 202211001656.6, filed with the China National Intellectual Property Administration on August 19, 2022 and entitled "AUDIO PROCESSING METHOD AND APPARATUS", which is incorporated herein by reference in its entirety.

## TECHNICAL FIELD

This application relates to the field of terminal technologies, and in particular, to an audio processing method and apparatus.

## BACKGROUND

With the popularity and development of terminal devices, a quantity of users listening to audio through a headset increases dramatically. When a terminal device is connected to the headset to play an audio signal, there is an obvious "in-head feeling" when an original stereo material or a multi-channel audio is downmixed and presented through the headset in a traditional way. The in-head feeling may be understood as an emitted sound being sensed as emitted from a position in the head to left and right sides of ears.

Generally, the terminal device may process an original audio signal through a suitable binaural room impulse response (binaural room impulse response, BRIR) parameter, so that a processed audio signal may produce a good spatial effect when played through the headset. The BRIR describes a sound transmission process from a sound source to a sound source receiving position (for example, the ears of a user).

However, the foregoing audio processing method cannot provide a good audio listening experience to the user.

## SUMMARY

Embodiments of this application provide an audio processing method and apparatus, so that a terminal device may match a suitable target parameter based on a head feature selected by a user, an audio signal outputted by the target parameter may adapt to the head feature of the user to implement personalized processing of the audio signal, and the user obtains a good audio listening experience.

According to a first aspect, an embodiment of this application provides an audio processing method, which is applied to a terminal device. The terminal device establishes a communication connection to a headset, and the method includes: displaying, by the terminal device, a first interface, where the first interface includes a plurality of controls for selecting a head feature; receiving, by the terminal device, a first operation for a first control in the plurality of controls; obtaining, by the terminal device, a first target parameter corresponding to the first control in response to the first operation, where the first target parameter includes one or more of the following: an interaural time difference, an interaural level difference, or an inter-aural coherence; obtaining, by the terminal device, a first audio signal; processing, by the terminal device, the first audio signal by using the first target parameter to obtain a second audio signal; and sending, by the terminal device, the second audio signal to the headset. In this way, the terminal device may match a suitable target parameter based on a head feature selected by a user, so that an audio signal outputted through the target parameter may adapt to the head feature of the user to implement personalized processing of the audio signal, and the user obtains a good audio listening experience.

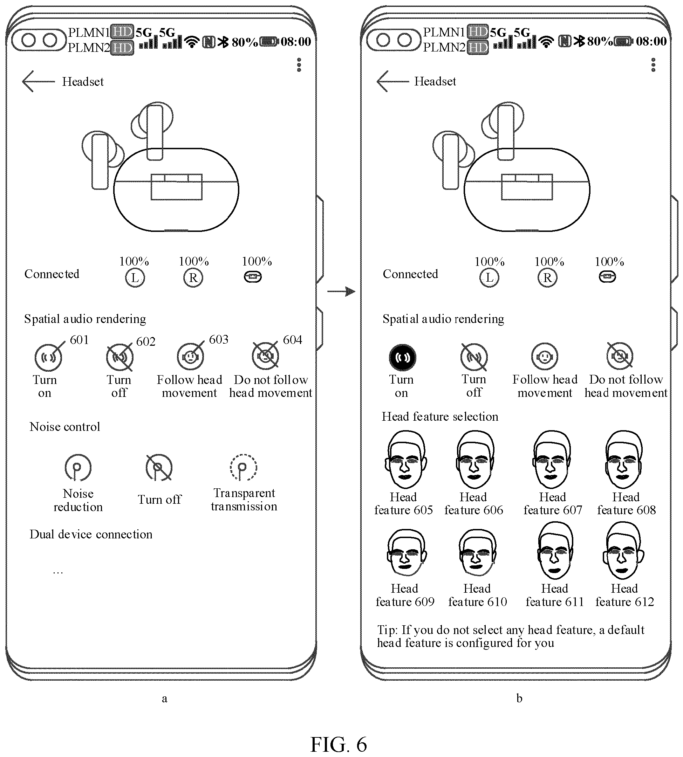

The first interface may be an interface shown in FIG. 6(b), and the first control may be a control corresponding to any head feature in the interface shown in FIG. 6(b).

In a possible implementation, the first interface further includes: a second control for selecting a spatial rendering type, and the method further includes: receiving, by the terminal device, a second operation for the second control; and obtaining, by the terminal device, a second target parameter corresponding to the second control in response to the second operation, where the second target parameter includes one or more of the following: a BRIR direct-to-reverberant ratio adjustment parameter, echo density, target spectral peaks and valleys, a room size, or a reverberation time; and the processing, by the terminal device, the first audio signal by using the first target parameter includes: processing, by the terminal device, the first audio signal by using the first target parameter and the second target parameter to obtain the second audio signal. In this way, the terminal device may obtain the second target parameter corresponding to the spatial rendering type based on the spatial rendering type selected by a user. The terminal device processes an original initial audio signal based on the second target parameter, so that a processed audio signal may simulate an effect when played in different spaces, to facilitate the user to obtain a good audio listening experience.

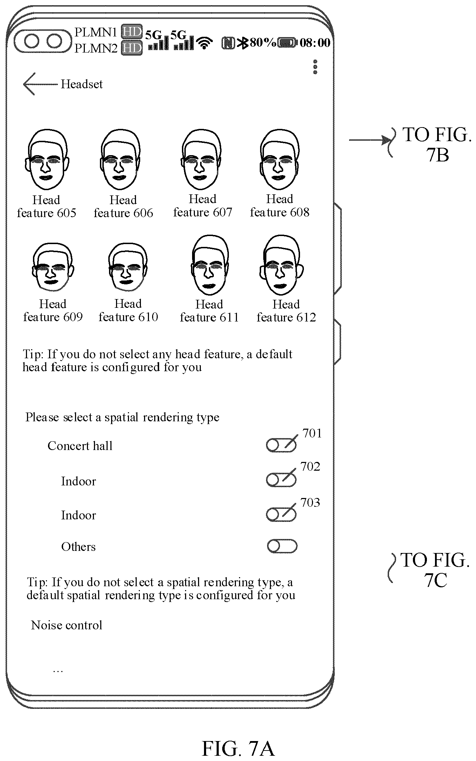

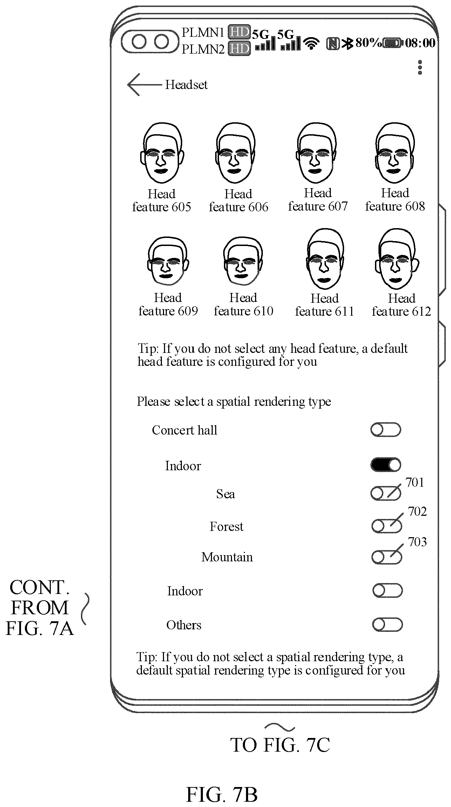

The second control for selecting the spatial rendering type may be a control corresponding to any rendering type in the interface shown in FIG. 7A (or FIG. 7B).

In a possible implementation, the obtaining, by the terminal device, a second target parameter corresponding to the second control in response to the second operation includes: displaying, by the terminal device, a progress bar corresponding to the second control in response to the second operation, where the progress bar is used for adjusting a distance between the second audio signal and the terminal device when the headset plays the second audio signal; receiving, by the terminal device, a third operation for the progress bar; and obtaining, by the terminal device, the second target parameter corresponding to a target position of the progress bar in response to the third operation. In this way, the user can not only simulate listening to audio in different spaces, but also flexibly adjust a distance between the audio and the user, which further improves an auditory experience of the user when listening to audio.

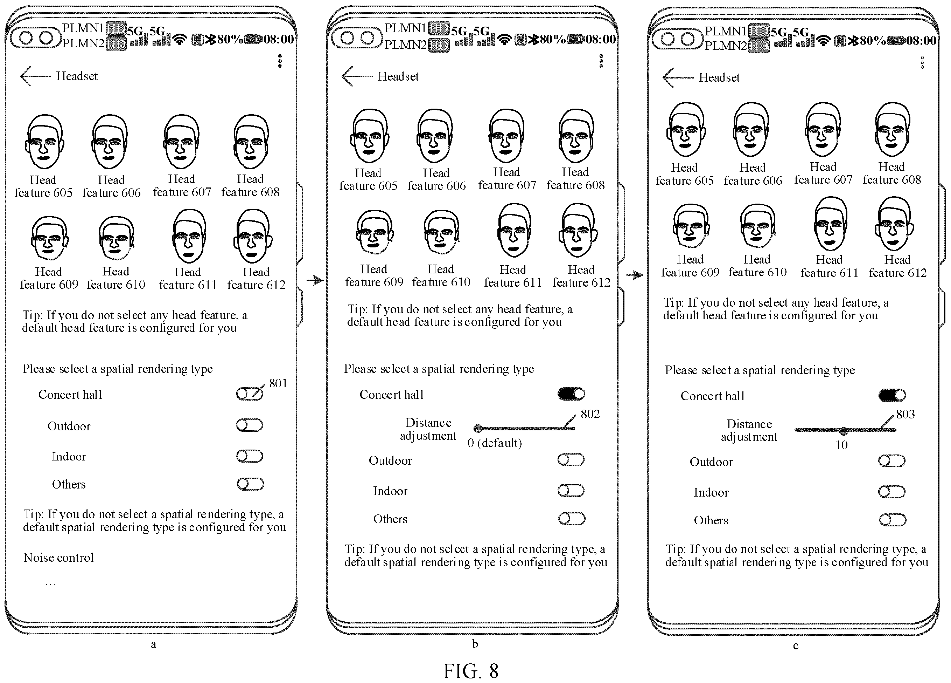

The progress bar corresponding to the second control may be a progress bar 802 shown in FIG. 8(b).

In a possible implementation, the method further includes: displaying, by the terminal device, a second interface, where the second interface includes a third control for performing spatial rendering on the first audio signal; and receiving, by the terminal device, a fourth operation for the third control; and the displaying, by the terminal device, a first interface includes: displaying, by the terminal device, the first interface in response to the fourth operation. In this way, the terminal device may perform spatial rendering on the audio signal based on the third control triggered by the user to improve the auditory experience of the user when listening to audio.

The second interface may be the interface shown in FIG. 6(a), and the third control may be an enabling control in the interface shown in FIG. 6(a).

In a possible implementation, the method further includes: inputting, by the terminal device, a first binaural room impulse response BRIR parameter and the first target parameter into a first target neural network model to output a second BRIR parameter, where an order of the first BRIR parameter is N1, an order of the second BRIR parameter is N2, and N1 is greater than N2; and a loss function of the first target neural network model is related to one or more parameters in the first target parameter; and the processing, by the terminal device, the first audio signal by using the first target parameter includes: processing, by the terminal device, the first audio signal by using the second BRIR parameter. In this way, the terminal device may reduce the order of the first BRIR parameter by using the first target neural network model, thereby simplifying complexity of audio processing.

The first BRIR parameter may be an N1-order BRIR parameter described in the embodiments of this application. The second BRIR parameter may be an N2-order BRIR parameter described in the embodiments of this application. The first audio signal may be an initial audio signal described in the embodiments of this application. The second audio signal may be a target audio signal described in the embodiments of this application.

In a possible implementation, the inputting, by the terminal device, a first BRIR parameter and the first target parameter into a first target neural network model to output a second BRIR parameter includes: inputting, by the terminal device, the first BRIR parameter, the first target parameter, and the second target parameter into the first target neural network model to output the second BRIR parameter, where the loss function is related to one or more parameters in a target parameter; and the target parameter includes the first target parameter and the second target parameter. In this way, the terminal device may adjust the BRIR parameter in the first target neural network model by using the first target parameter and the second target parameter, so that the second BRIR parameter outputted by the first target neural network model satisfies various requirements of the user for the audio signal.

In a possible implementation, the target parameter further includes: subjective loudness, or a value corresponding to a bark spectrum.

In a possible implementation, the method further includes: inputting, by the terminal device, a first BRIR parameter into a second target neural network model to output a third BRIR parameter, where an order of the first BRIR parameter is N1, an order of the third BRIR parameter is N2, and N1 is greater than N2; and adjusting, by the terminal device, the third BRIR parameter by using one or more parameters in the first target parameter to obtain a second BRIR parameter, where an order of the second BRIR parameter is N2; and the processing, by the terminal device, the first audio signal by using the first target parameter includes: processing, by the terminal device, the first audio signal by using the second BRIR parameter. In this way, the terminal device may reduce the order of the first BRIR parameter by using the second target neural network model, thereby simplifying complexity of audio processing.

In a possible implementation, the adjusting, by the terminal device, the third BRIR parameter by using one or more parameters in the first target parameter to obtain a second BRIR parameter includes: adjusting, by the terminal device, the third BRIR parameter by using the one or more parameters in the first target parameter to obtain a fourth BRIR parameter, where an order of the fourth BRIR parameter is N2; and adjusting, by the terminal device, the fourth BRIR parameter by using one or more parameters in the second target parameter to obtain the second BRIR parameter.

In a possible implementation, the processing, by the terminal device, the first audio signal by using the second BRIR parameter includes: obtaining, by the terminal device, a target rotation angle from the headset, where the target rotation angle is a rotation angle detected by the headset when the headset is worn; obtaining, by the terminal device, a target BRIR parameter corresponding to the target rotation angle from the second BRIR parameter, where an order of the target BRIR parameter is N2; and processing, by the terminal device, the first audio signal by using the target BRIR parameter. In this way, when playing the audio signal, the terminal device may process the audio signal in real time based on the target rotation angle to improve a sense of space of the user when listening to audio.

In a possible implementation, the second interface further includes: a fourth control for adjusting the second audio signal along with rotation of the headset when the second audio signal is played, and the method further includes: receiving, by the terminal device, a fifth operation for the fourth control; and sending, by the terminal device, indication information for obtaining the target rotation angle to the headset in response to the fifth operation; and the obtaining, by terminal device, a target rotation angle from the headset includes: obtaining, by terminal device, the target rotation angle from the headset based on the indication information. In this way, the user may determine whether to enable the audio following rotation of the headset based on the demand for audio playing, thereby improving the user experience when listening to audio.

The fourth control may be a head movement following control in the interface shown in FIG. 6(a).

According to a second aspect, an embodiment of this application provides an audio processing apparatus. A terminal device establishes a communication connection to a headset, and the method includes: a display unit, configured to display a first interface, where the first interface includes a plurality of controls for selecting a head feature; a processing unit, configured to receive a first operation for a first control in the plurality of controls; the processing unit is further configured to obtain a first target parameter corresponding to the first control in response to the first operation, where the first target parameter includes one or more of the following: an interaural time difference, an interaural level difference, or an inter-aural coherence; the processing unit is further configured to obtain a first audio signal; the processing unit is further configured to process the first audio signal by using the first target parameter to obtain a second audio signal; and a communication unit, configured to send the second audio signal to the headset.

In a possible implementation, the first interface further includes: a second control for selecting a spatial rendering type, and the processing unit is further configured to receive a second operation for the second control; the processing unit is further configured to obtain a second target parameter corresponding to the second control in response to the second operation, where the second target parameter includes one or more of the following: a BRIR direct-to-reverberant ratio adjustment parameter, echo density, target spectral peaks and valleys, a room size, or a reverberation time; and the processing unit is further configured to process the first audio signal by using the first target parameter and the second target parameter to obtain the second audio signal.

In a possible implementation, a display unit is configured to display a progress bar corresponding to the second control in response to the second operation, where the progress bar is used for adjusting a distance between the second audio signal and the terminal device when the headset plays the second audio signal; the processing unit is further configured to receive a third operation for the progress bar; and the processing unit is further configured to obtain the second target parameter corresponding to a target position of the progress bar in response to the third operation.

In a possible implementation, the display unit is further configured to display a second interface, the second interface includes a third control for performing spatial rendering on the first audio signal; and the processing unit is further configured to receive a fourth operation for the third control; and the display unit is further configured to display the first interface in response to the fourth operation.

In a possible implementation, the processing unit is further configured to input a first binaural room impulse response BRIR parameter and the first target parameter into a first target neural network model to output a second BRIR parameter, where an order of the first BRIR parameter is N1, an order of the second BRIR parameter is N2, and N1 is greater than N2; and a loss function of the first target neural network model is related to one or more parameters in the first target parameter; and that the processing unit is further configured to process the first audio signal by using the first target parameter includes: processing, by the terminal device, the first audio signal by using the second BRIR parameter.

In a possible implementation, the processing unit is further configured to input the first BRIR parameter, the first target parameter, and the second target parameter into the first target neural network model to output the second BRIR parameter, where the loss function is related to one or more parameters in a target parameter; and the target parameter includes the first target parameter and the second target parameter.

In a possible implementation, the target parameter further includes: subjective loudness, or a value corresponding to a bark spectrum.

In a possible implementation, the processing unit is further configured to input the first BRIR parameter into a second target neural network model to output a third BRIR parameter, where an order of the first BRIR parameter is N1, an order of the third BRIR parameter is N2, and N1 is greater than N2; and the processing unit is further configured to adjust the third BRIR parameter by using one or more parameters in the first target parameter to obtain a second BRIR parameter, where an order of the second BRIR parameter is N2; and the processing unit is further configured to process the first audio signal by using the second BRIR parameter.

In a possible implementation, the processing unit is further configured to adjust the third BRIR parameter by using one or more parameters in the first target parameter to obtain a fourth BRIR parameter, an order of the fourth BRIR parameter is N2; and the processing unit is further configured to adjust the fourth BRIR parameter by using one or more parameters in the second target parameter to obtain the second BRIR parameter.

In a possible implementation, the communication unit is further configured to obtain a target rotation angle from the headset, where the target rotation angle is a rotation angle detected by the headset when the headset is worn; the processing unit is further configured to obtain a target BRIR parameter corresponding to the target rotation angle from the second BRIR parameter, where an order of the target BRIR parameter is N2; and the processing unit is further configured to process the first audio signal by using the target BRIR parameter.

In a possible implementation, the second interface further includes: a fourth control for adjusting the second audio signal following a rotation of the headset when the second audio signal is played, and the processing unit is further configured to receive a fifth operation for the fourth control; the communication unit is further configured to send indication information for obtaining the target rotation angle to the headset in response to the fifth operation; and the communication unit is further configured to obtain the target rotation angle from the headset based on the indication information.

According to a third aspect, the embodiments of this application provide a terminal device, including a memory, a processor, and a computer program stored in the memory and executable on the processor. The computer program, when executed by the processor, causes the terminal device to perform the audio processing method according to the first aspect or any one of implementations of the first aspect.

According to a fourth aspect, the embodiments of this application provide a computer-readable storage medium. The computer-readable storage medium stores instructions. The instructions, when executed, cause a computer to perform the audio processing method according to the first aspect or any one of implementations of the first aspect.

According to a fifth aspect, a computer program product is provided, including a computer program. The computer program, when run, causes a computer to perform the audio processing method according to the first aspect or any one of implementations of the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

## BRIEF DESCRIPTION OF DRAWINGS

FIG. 1 is a schematic diagram of a scenario according to an embodiment of this application;
FIG. 2 is a schematic diagram of a hardware structure of a terminal device according to an embodiment of this application;
FIG. 3 is a schematic diagram of a hardware structure of a headset according to an embodiment of this application;
FIG. 4 is a schematic diagram of a software structure of a system architecture according to an embodiment of this application;
FIG. 5 is a schematic flowchart of an audio processing method according to an embodiment of this application;
FIG. 6 is a schematic diagram of an interface of enabling spatial audio rendering according to an embodiment of this application;
FIG. 7A, FIG. 7B, and FIG. 7C are schematic diagrams of another interface of enabling spatial audio rendering according to an embodiment of this application;
FIG. 8 is a schematic diagram of still another interface of enabling spatial audio rendering according to an embodiment of this application;
FIG. 9 is a schematic diagram of yet another interface of enabling spatial audio rendering according to an embodiment of this application;
FIG. 10 is a schematic flowchart of generating a BRIR parameter according to an embodiment of this application;
FIG. 11 is a schematic structural diagram of a neural network model according to an embodiment of this application;
FIG. 12 is a schematic structural diagram of another neural network model according to an embodiment of this application;
FIG. 13 is another schematic flowchart of generating a BRIR parameter according to an embodiment of this application;
FIG. 14 is a schematic structural diagram of an audio processing apparatus according to an embodiment of this application; and
FIG. 15 is a schematic diagram of a hardware structure of another terminal device according to an embodiment of this application.

## DESCRIPTION OF EMBODIMENTS

For ease of describing the technical solutions in the embodiments of this application clearly, in the embodiments of this application, terms such as "first" and "second" are used to distinguish same or similar items having basically same functions and purposes. For example, a first value and a second value are merely used to distinguish between different values, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, the word "exemplary" or "for example" is used to represent giving an example, an illustration, or a description. Any embodiment or design scheme described by using "exemplary" or "for example" in this application should not be explained as being more preferred or having more advantages than another embodiment or design scheme. To be precise, the use of the word such as "exemplary" or "for example" is intended to present a related concept in a specific manner.

In this application, "at least one" refers to one or more, and "a plurality of" refers to two or more. "And/or" describes an association relationship between associated objects and represents that three relationships may exist. For example, A and/or B may represent the following three cases: Only A exists, both A and B exist, and only B exists, where A and B may be singular or plural. The character "/" generally represents an "or" relationship between the associated objects. "At least one of the following items" or a similar expression thereof refers to any combination of these items, including a single item or any combination of a plurality of items. For example, at least one of a, b, or c may represent: a, b, c, a and b, a and c, b and c, or a, b, and c, where a, b, and c may be singular or plural.

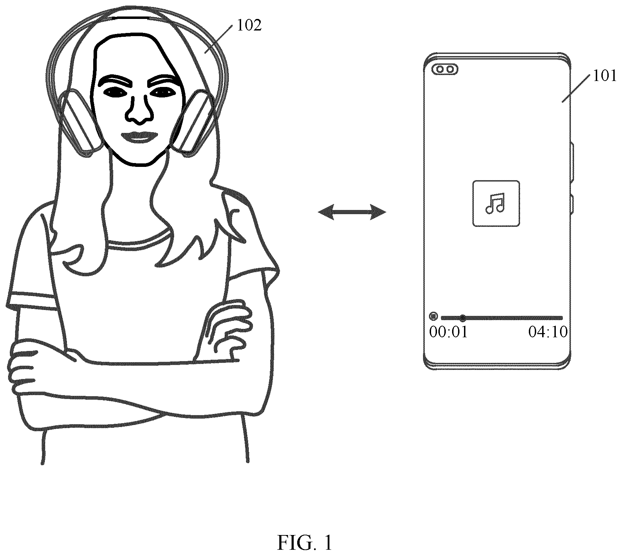

For example, FIG. 1 is a schematic diagram of a scenario according to an embodiment of this application. In the embodiment corresponding to FIG. 1, exemplary description is made by using an example in which a terminal device is a mobile phone, and this example does not constitute a limitation to the embodiments of this application.

As shown in FIG. 1, the scenario may include a terminal device 101 and a headset 102 worn by a user. The headset 102 may be a head-mounted headset as shown in FIG. 1, or the headset 102 may be a true wireless stereo (true wireless stereo, TWS) headset, a wired headset, or the like. A type of the headset 102 is not limited in the embodiments of this application.

For example, when the terminal device 101 establishes a communication connection to the headset 102, the user may process an initial audio signal by using the terminal device 101, and play a processed target audio signal through the headset 102. For example, the terminal device may process the initial audio signal by using a BRIR parameter, so that the processed target audio signal may produce a good spatial effect when played through the headset.

However, since everyone listens to a sound in an environment through his/her body, head, and auricles in real life, a personalized head related transfer function is also important for spatial positioning of each person. However, a professional head transfer function measurement method is very complex, time-consuming, and labor-consuming. In addition, different users have different head features, for example, different distances between ears of different users, different ear sizes of different users, different ear positions of different users, and different head sizes of different users, the head features of different users may have impact on the audio signal heard by the users. Consequently, the users cannot achieve a good audio listening experience.

In view of this, an embodiment of this application provides an audio processing method. In the method, a terminal device displays a first interface, where the first interface includes a plurality of controls for selecting a head feature. When the terminal device receives a first operation for a target control in the plurality of controls, the terminal device may match a suitable target parameter for the target control, so that a first audio signal outputted by using the target parameter may adapt to the head feature of the user to implement personalized processing on the audio signal, and the user can obtain a good audio listening experience. The target parameter includes one or more of the following: an interaural time difference, an interaural level difference, or an inter-aural coherence.

It may be understood that, the foregoing terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart television, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The wearable device may include: devices such as a smart watch, a smart bracelet, or a smart belt. The embodiments of this application impose no limitation on specific technologies and specific device forms used by the terminal device and the wearable device.

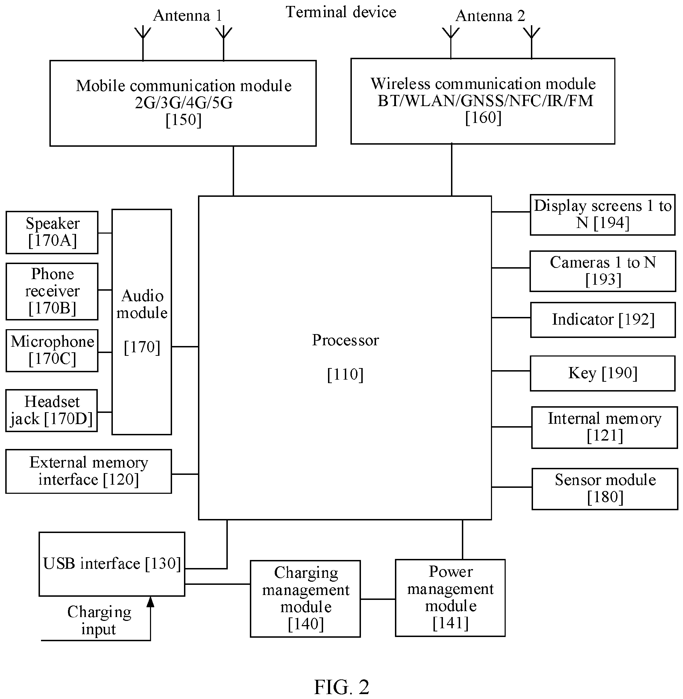

Therefore, to better understand the embodiments of this application, the following describes a structure of the terminal device in the embodiments of this application. For example, FIG. 2 is a schematic structural diagram of a terminal device according to an embodiment of this application.

The terminal device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, an indicator 192, a camera 193, a display screen 194, and the like.

It may be understood that the structure shown in this embodiment of this application does not constitute a specific limitation on the terminal device. In some other embodiments of this application, the terminal device may include more or fewer components than those shown in the figure, or some components may be combined, or some components may be split, or a different component deployment may be used. The components shown in the figure may be implemented by hardware, software, or a combination of software and hardware.

The processor 110 may include one or more processing units. Different processing units may be independent components, or may be integrated into one or more processors. A memory may further be arranged in the processor 110, and is configured to store instructions and data.

The USB interface 130 is an interface that conforms to the USB standard specification, and may be specifically a Mini USB interface, a Micro USB interface, a USB Type C interface, or the like. The USB interface 130 may be configured to connect to a charger to charge the terminal device, or may be used for data transmission between the terminal device and a peripheral device, or may be configured to connect to a headset to play audio through the headset. The interface may alternatively be configured to connect to another terminal device such as an AR device.

The charging management module 140 is configured to receive a charging input from a charger. The charger may be a wireless charger, or may be a wired charger. The power management module 141 is configured to connect the charging management module 140 to the processor 110.

A wireless communication function of the terminal device may be implemented by using the antenna 1, the antenna 2, the mobile communication module 150, the wireless communication module 160, a modem processor, a baseband processor, and the like.

The antenna 1 and the antenna 2 are configured to transmit and receive an electromagnetic wave signal. An antenna in the terminal device may be configured to cover a single communication frequency band or a plurality of communication frequency bands. Different antennas may further be multiplexed to improve utilization of the antennas.

The mobile communication module 150 may provide a solution for wireless communication including 2G/3G/4G/5G and the like to be applied to the terminal device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing, such as filtering and amplification, on the received electromagnetic wave, and transmit the processed electromagnetic wave to the modem processor for demodulation.

The wireless communication module 160 may provide a solution for wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), and the like to be applied to the terminal device.

The terminal device implements a display function by using a GPU, the display screen 194, an application processor, and the like. The GPU is a microprocessor for image processing, and is connected to the display screen 194 and the application processor. The GPU is configured to perform mathematical and geometric calculation and perform graphics rendering.

The display screen 194 is configured to display an image, a video, or the like. The display screen 194 includes a display panel. In some embodiments, the terminal device may include 1 or N display screens 194, where N is a positive integer greater than 1.

The terminal device may implement a photographing function by using an ISP, the camera 193, a video codec, the GPU, the display screen 194, the application processor, and the like.

The camera 193 is configured to capture a static image or a video. In some embodiments, the terminal device may include 1 or N cameras 193, where N is a positive integer greater than 1.

The external memory interface 120 may be configured to connect to an external storage card such as a micro SD card, to extend a storage capability of the terminal device. The external storage card communicates with the processor 110 by using the external memory interface 120, so as to implement a data storage function, for example, store files such as music or a video in the external storage card.

The internal memory 121 may be configured to store computer-executable program code, and the executable program code includes instructions. The internal memory 121 may include a program storage region and a data storage region.

The terminal device may implement an audio function, for example, audio playing or recording, by using the audio module 170, the speaker 170A, the phone receiver 170B, the microphone 170C, the headset jack 170D, the application processor, and the like.

The audio module 170 is configured to convert digital audio information into an analog audio signal output, and is further configured to convert an analog audio input into a digital audio signal. The speaker 170A, also referred to as a "loudspeaker", is configured to convert an audio electrical signal into a sound signal. The terminal device includes at least one speaker 170A. Music can be listened to or a hands-free call can be answered by using the speaker 170A in the terminal device. The phone receiver 170B, also referred to as a "receiver", is configured to convert an audio electrical signal into a sound signal. When the terminal device is used to answer a call or receive voice information, the phone receiver 170B may be put close to a human ear to listen to a voice.

In this embodiment of this application, a plurality of playback devices may be arranged in the terminal device. The playback devices may include: the speaker 170A and/or the phone receiver 170B. In a scenario in which the terminal device plays a video, at least one speaker 170A and/or at least one phone receiver 170B simultaneously play an audio signal.

The headset jack 170D is configured to connect to a wired headset. The microphone 170C, also referred to as a "MIC" or a "mike", is configured to convert a sound signal into an electrical signal. In this embodiment of this application, the terminal device may receive a sound signal for waking up the terminal device based on the microphone 170C, and convert the sound signal into an electrical signal that can be used for subsequent processing, such as voiceprint data described in this embodiment of this application. The terminal device may have at least one microphone 170C.

The sensor module 180 may include one or more of the following sensors, for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, or a bone conduction sensor (not shown in FIG. 2).

The key 190 includes a power key, a volume key, and the like. The key 190 may be a mechanical key, or may be a touch-based key. The terminal device may receive a key input, and generate a key signal input related to a user setting and function control of the terminal device. The indicator 192 may be an indicator light, which may be configured to indicate a charging state and a battery change, and may further be configured to indicate a message, a missed call, a notification, and the like.

A software system of the terminal device may use a layered architecture, an event-driven architecture, a microkernel architecture, a micro service architecture, or a cloud architecture. Details are not described herein.

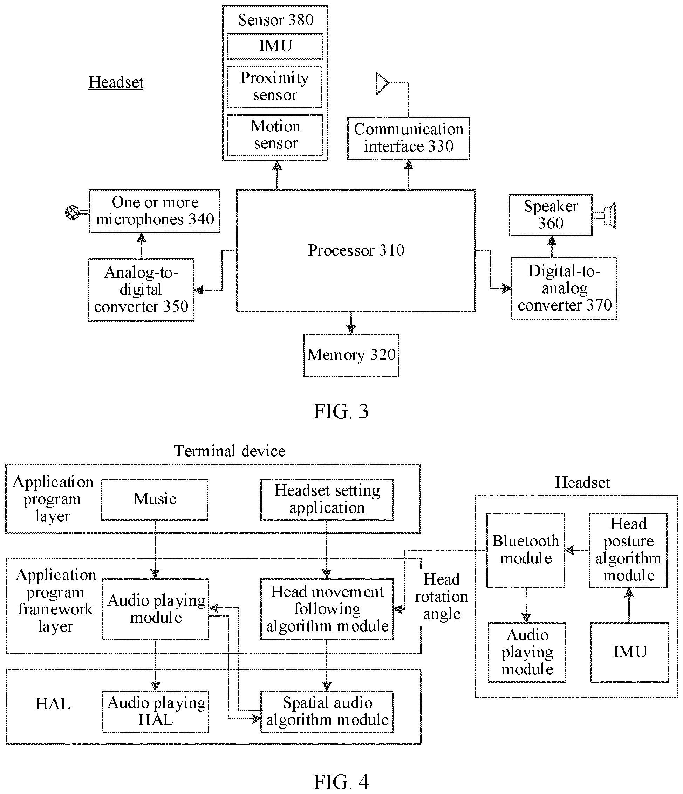

For example, FIG. 3 is a schematic diagram of a hardware structure of a headset according to an embodiment of this application.

As shown in FIG. 3, the headset includes one or more processors 310, one or more memories 320, a communication interface 330, an audio acquisition circuit, and an audio playing circuit. The audio acquisition circuit may further include at least one microphone 340 and an analog-to-digital converter (analog-to-digital converter, ADC) 350. The audio playing circuit may further include a speaker 360 and a digital-to-analog converter (digital-to-analog converter, DAC).

The headset may further include one or more sensors 380, for example, an inertial measurement unit (inertial measurement unit, IMU), a proximity sensor, and a motion sensor (motion sensor). These foregoing hardware components may communicate on one or more communication buses.

In this embodiment of this application, the IMU may be configured to measure a motion posture of the headset, for example, the IMU may be configured to determine a head rotation angle of the user when wearing the headset. A gyroscope sensor, an acceleration sensor, and the like may be arranged in the IMU.

The processor 310 is a control center of the headset, and the processor may also be referred to as a control unit, a controller, a microcontroller, or another suitable term. The processor 310 is connected to various components of the headset by using various interfaces and lines. In a possible embodiment, the processor 310 may further include one or more processing cores. In a possible embodiment, a main control unit and a signal processing module may be integrated into the processor 310. The main control unit (MCU) is configured to receive data acquired by the sensor 380, a monitoring signal from the signal processing module, or a control signal from a terminal (for example, a mobile phone APP), and finally control the headset through comprehensive judgment and decision-making.

The memory 320 may be coupled to the processor 310 or connected to the processor 310 through a bus, and is configured to store various software programs and/or a plurality of sets of instructions and data. The memory 320 may further store a communication program, and the communication program may be used to communicate with the terminal. In an example, the memory 320 may further store data/program instructions, and the processor 310 may be configured to call and execute the data/program instructions in the memory 320. For example, a plurality of sets of noise reduction parameters may be stored in the memory 320. Optionally, the memory 320 may be a memory outside the MCU, or may be a storage unit built in the MCU.

The communication interface 330 is configured to communicate with the terminal, and a communication manner may be a wired manner or a wireless manner. When communication is performed in a wired communication manner, the communication interface 330 may be connected to the terminal through a cable. When communication is performed in a wireless communication manner, the communication interface 330 is configured to receive and send a radio frequency signal. The wireless communication manner supported by the communication interface 330 may be, for example, at least one of communication manners: Bluetooth (Bluetooth) communication, wireless fidelity (wireless-fidelity, Wi-Fi) communication, infrared communication, or cellular 2/3/4/5 generation (2/3/4/5 generation, 2G/3G/4G/5G) communication.

The microphone 340 may be configured to acquire a sound signal (or referred to as an audio signal, where the audio signal is an analog signal). The analog-to-digital converter 350 is configured to convert the analog signal acquired by the microphone 340 into a digital signal, and send the digital signal to the processor 310 for processing. In a specific embodiment, the digital signal may be sent to the signal processing module for processing. The signal processing module may send a processed signal (for example, a mixed audio signal) to the digital-to-analog converter 370. The digital-to-analog converter 370 may convert a received signal into an analog signal, and then send the analog signal to the speaker 360. The speaker is configured to perform playing based on the analog signal, so that the user can hear sound.

In this embodiments of this application, the communication interface 330 may be configured to send the head rotation angle detected by the IMU to the terminal device, so that the terminal device may match a suitable BRIR parameter by using the head rotation angle. In addition, the communication interface 330 may further be configured to receive an audio signal sent by the terminal device.

It may be understood that, the foregoing headset may also be referred to as an earplug, an earphone, a Walkman, an audio player, a media player, a head-mounted phone receiver, a receiver device, or another suitable term. This is not limited in this embodiments of this application.

In this embodiment of this application, an Android (Android) system with a layered architecture is used as an example to illustrate a software structure of the terminal device. For example, FIG. 4 is a schematic diagram of a software structure of a system architecture according to an embodiment of this application.

As shown in FIG. 4, the system architecture may include a terminal device and a headset. The terminal device may display a layered architecture, and each layer has a clear role and task. Communication between layers is performed through a software interface. In some embodiments, the Android system is divided into an application program layer, an application program framework (framework) layer, and a hardware abstraction layer (hardware abstraction layer, HAL) from top to bottom. It may be understood that, the layered architecture may include other layers according to an actual scenario. Details are not described in this embodiment of this application again.

The application program layer may include a series of application programs. For example, the application program layer may include: a music application, a headset setting application, and the like. The music application may be used to control playback and pause of an audio signal; and the headset setting application may be used to implement setting of an audio playing effect when audio is played by using the headset. Both the music application and the headset setting application may be system applications in the terminal device, or may be applications provided by a third party. This is not limited in the embodiments of this application.

It may be understood that, the application program layer may further include: application programs (not shown in FIG. 4) such as Camera, Calendar, Phone, Map, Call, Music, Email, Video, and Social. This is not limited in the embodiments of this application.

The application program framework layer provides an application programming interface (application programming interface, API) and a programming framework for the application programs at the application program layer. The application program framework layer includes some predefined functions.

The application program framework layer may include: an audio playing module, a head following algorithm module, and the like. The audio playing module is configured to indicate an audio playing HAL to call a hardware interface for audio playing based on indication information sent by the music application. The audio playing module may further be configured to process and forward a received audio signal. The head following algorithm module may be configured to determine a relative angle between a head of a user and the terminal device based on a head rotation angle. Alternatively, the head following algorithm module may further be configured to send an obtained head rotation angle to a spatial audio algorithm module based on an indication sent by the headset setting application.

In a possible implementation, the application program framework layer may further include: a window manager, a content provider, a resource manager, a view system, a notification manager, and the like (not shown in FIG. 4).

For example, the window manager is configured to manage a window program. The window manager may obtain a size of a display screen, determine whether there is a status bar, lock the screen, touch the screen, drag the screen, take a screenshot, and the like. The content provider is configured to store and obtain data and make the data accessible to an application program. The data may include a video, an image, audio, calls made and answered, a browsing history and bookmarks, an address book, and the like. The view system includes a visual control such as a control for displaying text and a control for displaying a picture. The view system may be configured to construct an application program. A display interface may include one or more views. For example, a display interface including an SMS message notification icon may include a view for displaying text and a view for displaying a picture. The resource manager provides various resources such as a localized character string, an icon, a picture, a layout file, and a video file for an application program. The notification manager enables an application program to display notification information in a status bar, may be configured to convey a notification-type message. The notification-type message may automatically disappear after the message is displayed for a short period of time without user interaction. For example, the notification manager is configured to provide a notification of download completion, a message notification, and the like. The notification manager may also be a notification that appears in a top status bar of the system in a form of a graph or scroll bar text, for example, a notification of an application program running in the background, or may be a notification that appears on the screen in a form of a dialog window. For example, text information is prompted on the status bar, a prompt tone is made, the terminal device vibrates, or an indicator light flashes.

An objective of the HAL layer is to abstract hardware, which may provide a unified interface for querying a hardware device for an upper-layer application, or provide a data storage service for an upper-layer application, or provide a data processing service for an upper-layer application. The HAL layer provided in this embodiment of this application may include: an audio playing HAL and a spatial audio algorithm module.

The audio playing HAL is used for forwarding an audio signal. For example, the audio playing HAL is used for playing the audio signal sent from the audio playing module through hardware.

The spatial audio algorithm module is configured to determine an N2-order BRIR parameter by using a target parameter and an N1-order BRIR parameter, and perform spatial rendering on the audio signal by using the N2-order BRIR parameter. Alternatively, the spatial audio algorithm may further be configured to send the audio signal after spatial rendering to the audio playing module for processing. The target parameter may include a first target parameter, a second target parameter, subjective loudness, a value corresponding to bark spectrum, and the like described in the embodiments of this application.

As shown in FIG. 4, the headset may include: a Bluetooth module, a head posture algorithm module, an audio playing module, an IMU, and the like. The Bluetooth module may be configured to receive the audio signal sent by the terminal device, and the Bluetooth module may further be configured to forward a head rotation angle calculated by the head posture algorithm module. The audio playing module may further be configured to play the audio signal received by the Bluetooth module. The head posture algorithm module is configured to calculate the head rotation angle based on motion data acquired by the IMU. The IMU is configured to acquire motion data of a head of the user when wearing the headset. The motion data may include: gyroscope data, acceleration data, and the like.

The following describes the technical solutions of this application and how to resolve the foregoing technical problems according to the technical solutions of this application in detail by using specific embodiments. The following several specific embodiments may be independently implemented, and may alternatively be combined with each other. For the same or similar concepts or processes, details may not be described repeatedly in some embodiments.

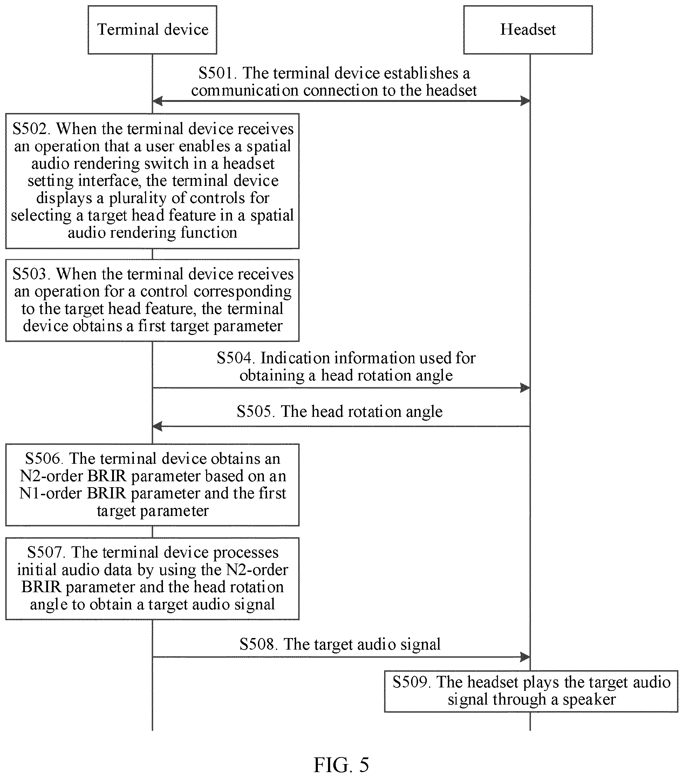

For example, FIG. 5 is a schematic flowchart of an audio processing method according to an embodiment of this application. In the embodiment corresponding to FIG. 5, the audio processing method may involve a terminal device and a headset.

As shown in FIG. 5, the audio processing method may include the following steps:

S501: A terminal device establishes a communication connection to a headset.

For example, the terminal device may establish a communication connection to the headset in a wired manner; or the terminal device may alternatively establish communication connection to the headset in a wireless manner. For example, the terminal device may establish communication connection to the headset in a wireless manner such as Bluetooth, WIFI, or connecting to a same cloud account. A manner in which the terminal device establishes communication connection to the headset is not limited in the embodiments of this application.

S502: When the terminal device receives an operation that a user enables a spatial audio rendering switch in a headset setting interface, the terminal device displays a plurality of controls for selecting a target head feature in a spatial audio rendering function.

The spatial audio rendering function may be understood as simulating effects of listening to audio in different spaces and processing initial audio signal, so that the processed audio signal has a sense of space and a three-dimensional sense.

For example, FIG. 6 is a schematic diagram of an interface of enabling spatial audio rendering according to an embodiment of this application. In the embodiment corresponding to FIG. 6, exemplary description is made by using an example in which the terminal device is a mobile phone, and this example does not constitute a limitation to the embodiments of this application.

When the terminal device receives a trigger operation of the user for a function for setting the headset, the terminal device may display an interface as shown in FIG. 6(a), and the interface may be a headset setting interface. In the interface shown in FIG. 6(a), the interface may include: a control 601 for enabling spatial audio rendering (or referred to as an enabling control 601), a control 602 for disabling spatial audio rendering (or referred to as a disabling control 602), a control 603 for indicating that audio may follow head movement during the spatial audio rendering (or referred to as a head movement following control 603), and a control 604 for indicating that the audio may not follow the head movement during the spatial audio rendering (or referred to as a head movement non-following control 604). The function for setting the headset may be a function in a headset setting application.

In a possible implementation, the interface shown in FIG. 6(a) may further include: a control for exiting headset setting, a control for enabling more functions of the headset, a control for displaying a connection status of the headset and identifiers of a left headset, a right headset, and a battery status of a headset box, a control for noise reduction, a control for disabling noise reduction, a control for transparent transmission, a control for setting dual device connection, and the like. Content displayed in the interface shown in FIG. 6(a) is not specifically limited in the embodiments of this application.

In the interface shown in FIG. 6(a), when the terminal device receives a trigger operation of the user for the enabling control 601, the terminal device may display an interface shown in FIG. 6(b). In the interface shown in FIG. 6(b), the interface may display a sub-function, for example, a head feature selection function, corresponding to the spatial audio rendering. A plurality of head features may be displayed in an interface in which the head feature selection function is located, for example, a head feature 605, a head feature 606, a head feature 607, a head feature 608, a head feature 609, a head feature 610, a head feature 611, and a head feature 612. A quantity of head features and styles of the head features set in the terminal device are not limited in the embodiments of this application. The interface shown in FIG. 6(b) may further include prompt information. For example, the prompt information may be displayed as: If you do not select any head feature, a default head feature is configured for you.

It may be understood that, different users have different head features. For example, head features such as a width and a height of the head of the user, a distance between ears of the user, sizes of the ears, and positions of the ears may be different. For the plurality of head features shown in FIG. 6(b), an ear width of the head feature 606 is smaller than an ear width of the head feature 605; an ear size of the head feature 607 is smaller than an ear size of the head feature 605 and is smaller than an ear size of the head feature 606; an ear position of the head feature 608 is relatively low; a head feature length of the head feature 609 is less than a head feature length of the head feature 605, and an ear size of the head feature 609 is greater than the ear size of the head feature 605; a head feature length of the head feature 610 is less than the head feature length of the head feature 605, and an ear size of the head feature 610 is less than the ear size of the head feature 605; a head feature length of the head feature 611 is greater than the head feature length of the head feature 605, and an ear size of the head feature 611 is smaller than the ear size of the head feature 605; and a head feature length of the head feature 612 is greater than the head feature length of head feature 605, and an ear size of the head feature 612 is greater than the ear size of the head feature 605.

In this way, the terminal device may pre-configure a plurality of head features, and the user may select a head feature that is most similar to himself/herself from the plurality of pre-configured head features.

S503: When the terminal device receives an operation for a control corresponding to the target head feature, the terminal device obtains a first target parameter.

The control corresponding to the target head feature may be a control corresponding to any head feature in the interface shown in FIG. 6(b). The first target parameter may be a parameter related to the target head feature. For example, the first target parameter may include one or more of the following: an interaural time difference (interaural time difference, ITD), an interaural level difference (interaural level difference, ILD), or inter-aural coherence (Inter-aural coherence, IC).

In a possible implementation, the first target parameter may further include other parameters related to the head feature. This is not limited in the embodiments of this application.

For example, in the interface shown in FIG. 6(b), when the terminal device receives a trigger operation of the user for any head feature, for example, when the terminal device receives a trigger operation of the user for the head feature 605, the terminal device may obtain a first target parameter corresponding to the head feature 605.

S504: When the terminal device receives a control for enabling audio playing following head movement, the terminal device sends indication information for obtaining a head rotation angle to the headset.

The indication information for obtaining the head rotation angle may be sent to the headset based on Bluetooth. For example, in the interface shown in FIG. 6(a), when the terminal device receives a trigger operation of the user for the head movement following control 603, the terminal device may send the indication information for obtaining the head rotation angle to the headset based on Bluetooth.

S505: The headset sends the head rotation angle to the terminal device.

For example, the IMU in the headset may obtain a motion posture of the headset when the user wears the headset, and determine the head rotation angle based on the head posture algorithm module in the headset. Further, the headset may send the head rotation angle to the terminal device based on Bluetooth.

In a possible implementation, when the headset and the terminal device establish communication connection based on the step shown in S501, the terminal device may further set that audio follows the head movement by default when playing an audio signal, so that a plurality of times of triggering by the user may be avoided. In a scenario in which the terminal device sets that audio follows the head movement by default when playing an audio signal, the headset may further periodically send the head rotation angle to the terminal device.

S506: The terminal device obtains an N2-order BRIR parameter based on an N1-order BRIR parameter and the first target parameter.

The N1-order BRIR parameter may be preset in the terminal device or a cloud server.

In an implementation, the terminal device may input the N1-order BRIR parameter and the first target parameter into a neural network model to output the N2-order BRIR parameter.

In the embodiments of this application, the neural network model may be set in the cloud server, so that the terminal device may input the N1-order BRIR parameter and the first target parameter into the neural network model in the cloud server, and generate the N2-order BRIR parameter in the cloud server. Alternatively, the neural network model may also be set in the terminal device, so that the terminal device may input the N1-order BRIR parameter and the first target parameter into a local neural network model to generate the N2-order BRIR parameter. The N1-order BRIR parameter may be set in the terminal device or in the cloud server. This is not limited in the embodiments of this application.

The neural network model described in this implementation is configured to reduce an order of a BRIR parameter and adjust the neural network model based on the first target parameter, where N1 is greater than N2.

In another implementation, the terminal device may input the N1-order BRIR parameter into a neural network model to output an N2-order BRIR intermediate parameter; and adjust the N2-order BRIR intermediate parameter at least once by using at least one parameter in the first target parameters to obtain a final N2-order BRIR parameter. The neural network model described in the another implementation is configured to reduce an order of a BRIR parameter.

It may be understood that, since processing on an audio signal by using a high-order BRIR parameter has relatively high complexity and occupies relatively large memory space, the terminal device may reduce the order of the BRIR parameter by using the neural network model, to simplify the complexity of audio processing.

S507: The terminal device processes an initial audio signal by using the N2-order BRIR parameter and the head rotation angle to obtain a target audio signal.

The head rotation angle may include: a horizontal angle, an inclination angle, a pitch angle, and the like. A range of the horizontal angle may be [0°-360°), a range of the pitch angle may be [-90°-90°], and a range of the inclination angle may be [-90°-90°]. The horizontal angle may be understood as a rotation angle of the head of the user in a horizontal direction; the pitch angle may be understood as a rotation angle of the head of the user in a vertical direction, for example, a corresponding angle when the user raises the head or a corresponding angle when the user lowers the head. The inclination angle may be an angle between an inclination position and a horizontal position of the head when the user inclines the head.

The initial audio signal (or referred to as a first audio signal) may include: an initial left channel audio signal and an initial right channel audio signal. The N2-order BRIR parameter may further include an N2-order BRIR parameter corresponding to a left channel and an N2-order BRIR parameter corresponding to a right channel.

It may be understood that there is a correspondence between the head rotation angle and the N2-order BRIR parameter. For example, the terminal device may obtain an N2-order target BRIR parameter corresponding to any head rotation angle, perform convolution processing on the initial left channel audio signal by using a left channel N2-order target BRIR parameter in the N2-order target BRIR parameter, and perform convolution processing on the initial right channel audio signal by using a right channel N2-order target BRIR parameter in the N2-order target BRIR parameter to obtain the target audio signal (or referred to as a second audio signal).

When the head rotation angle includes the horizontal angle, the inclination angle, and the pitch angle, a correspondence between one or more of the horizontal angle, the inclination angle, and the pitch angle and the N2-order BRIR parameter may be stored in the terminal device. In this way, when the initial audio signal is processed by using the N2-order BRIR parameter, the terminal device obtains N2-order BRIR parameters corresponding to one or more of the horizontal angle, the inclination angle, and the pitch angle, and performs audio signal processing by using the N2-order BRIR parameters corresponding to the angles.

S508: The terminal device sends the target audio signal to the headset.

S509: The headset plays the target audio signal through a speaker.

It may be understood that, the target audio signal may include a target audio signal corresponding to the left channel and a target audio signal corresponding to the right channel, so that the headset can play the target audio signal corresponding to the left channel through a left speaker, and play the target audio signal corresponding to the right channel through a right speaker.

Based on this, the terminal device can reduce the order of the BRIR parameter by using the neural network model, to reduce the complexity during audio processing. In addition, the terminal device may further match a suitable first target parameter based on selection of the user for the target head feature, so that the terminal device may process the initial audio signal through an N2-order BRIR parameter related to the first target parameter to implement personalized processing on the audio signal. Therefore, the user obtains a good audio listening experience.

It may be understood that, the steps shown in S506 and S507 in the embodiment corresponding to FIG. 5 may be performed in the terminal device, or in a processor of the headset, or in the cloud server. This is not limited in the embodiments of this application.

Based on the embodiment corresponding to FIG. 5, the terminal device may further obtain a second target parameter based on selection of the user for any rendering type of the spatial audio rendering function. Further, the terminal device may further input the second target parameter into the neural network model in the step shown in S506, to output the N2-order BRIR parameter.

In this scenario, the step shown in S506 may be that: The terminal device inputs the N1-order BRIR parameter, the first target parameter, and the second target parameter into the neural network model to output the N2-order BRIR parameter.

The second target parameter may include one or more of the following: a BRIR direct-to-reverberant ratio adjustment parameter, echo density, specific spectral peaks and valleys, a room size, or a reverberation time.

It may be understood that, the second target parameter may also be used for adjusting the neural network.

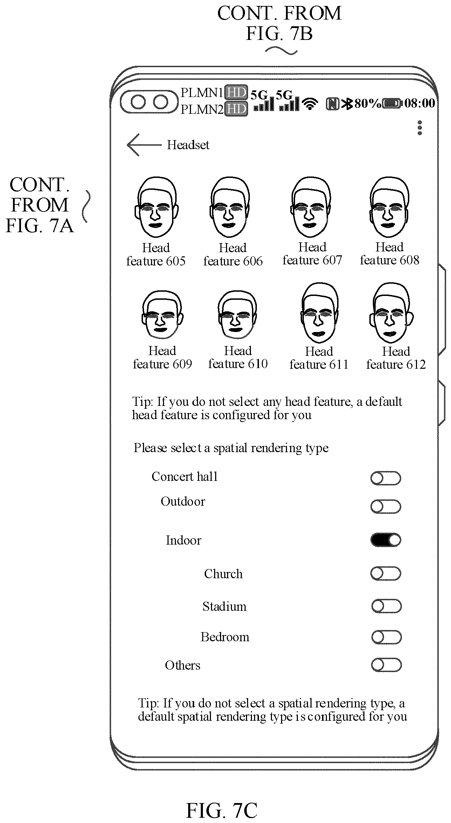

For example, FIG. 7A, FIG. 7B, and FIG. 7C are schematic diagrams of another interface of enabling spatial audio rendering according to an embodiment of this application.

When the terminal device receives an operation of the user of sliding a screen upward in the interface shown in FIG. 6(b), the terminal device may display an interface shown in FIG. 7A. In the interface shown in FIG. 7A, the interface may include: a plurality of spatial rendering types corresponding to the spatial audio rendering function, for example, a control 701 corresponding to a concert hall rendering type, a control 702 corresponding to an outdoor rendering type (or referred to as an outdoor control 702), a control 703 corresponding to an indoor rendering type (or referred to as an indoor control 703), and a control corresponding to another rendering type. The interface shown in FIG. 7A may further include prompt information. For example, the prompt information may be displayed as: If you do not select a spatial rendering type, a default idle rendering type is configured for you.

In a possible implementation, when the terminal device receives a trigger operation of the user for the control 701 corresponding to the concert hall rendering type, the terminal device may obtain a second target parameter corresponding to the control 701 corresponding to the concert hall rendering type, so that the second target parameter may be used for adjusting the N1-order BRIR parameter in the neural network model.

In an implementation, in the interface shown in FIG. 7A, when the terminal device receives a trigger operation of the user for the outdoor control 702, the terminal device displays an interface shown in FIG. 7B. In the interface shown in FIG. 7B, the interface may include rendering types corresponding to the outdoor rendering type such as a sea rendering type, a forest rendering type, and a mountain rendering type. Specific content included in the outdoor rendering type is not limited in the embodiments of this application. Any outdoor rendering type may correspond to a set of second target parameters.

In another implementation, in the interface shown in FIG. 7A, when the terminal device receives a trigger operation of the user for the indoor control 703, the terminal device displays an interface shown in FIG. 7C. In the interface shown in FIG. 7C, the interface may include rendering types corresponding to the indoor rendering type such as a church rendering type, a stadium rendering type, a bedroom rendering type. Specific content included in the indoor rendering type is not limited in the embodiments of this application. Any indoor rendering type may correspond to a set of second target parameters.

In this way, the terminal device may obtain the second target parameter corresponding to the spatial rendering type based on the spatial rendering type selected by a user. The terminal device processes an original initial audio signal based on the second target parameter, so that a processed audio signal may simulate an effect when played in different spaces, to facilitate the user to obtain a good audio listening experience.

In a possible implementation, the terminal device may further support adjustment of a distance between a sound source and the user (the user may also be understood as a sound source listening position, for example, ears of the user) in any spatial rendering type. There is a correspondence between the distance between the sound source and the user and the BRIR direct-to-reverberant ratio adjustment parameter (and/or the echo density) in the second target parameter.

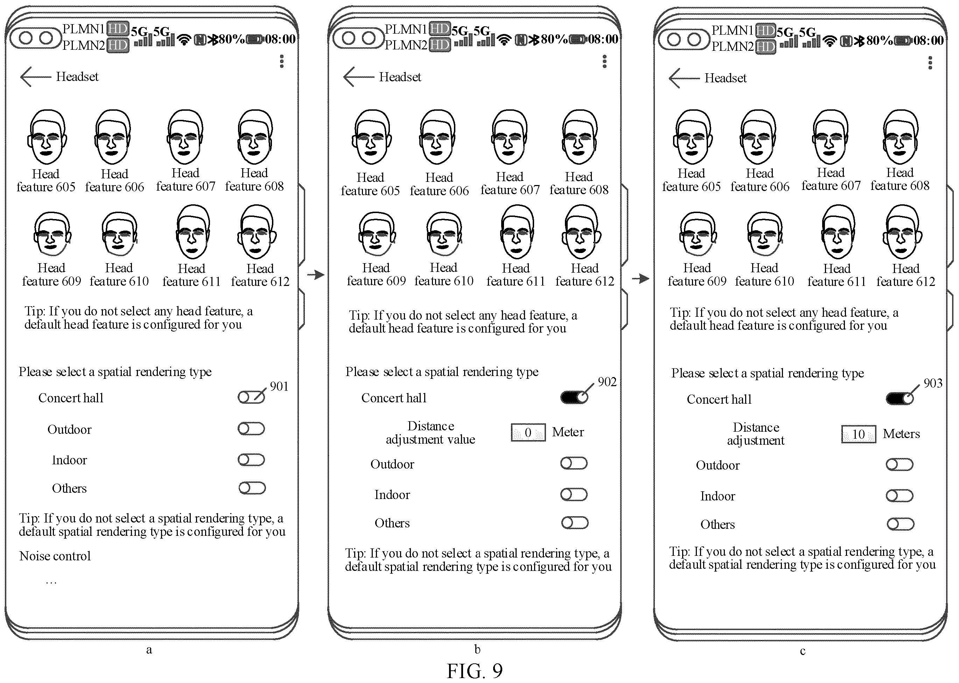

In the embodiments of this application, the terminal device may further support two manners of adjusting the distance between the sound source and the user. For example, the terminal device may support adjustment of the distance between the sound source and the user through a progress bar (refer to an embodiment corresponding to FIG. 8). Alternatively, the terminal device may support adjustment of the distance between the sound source and the user by inputting a distance value between the sound source and the user through a text box (refer to an embodiment corresponding to FIG. 9).

In an implementation, the terminal device may support adjustment of the distance between the sound source and the user through a progress bar.

For example, FIG. 8 is a schematic diagram of still another interface of enabling spatial audio rendering according to an embodiment of this application.

The terminal device displays an interface shown in FIG. 8(a). The content displayed in the interface may be similar to the interface shown in FIG. 7B, and details are not described herein again. In the interface shown in FIG. 8(a), when the terminal device receives the trigger operation of the user for the control 801 corresponding to the concert hall rendering type, the terminal device may display the interface shown in FIG. 8(b). In the interface shown in FIG. 8(b), the interface may include: a progress bar 802 for adjusting the distance between the sound source and the user. The progress bar 802 may be at a default position, for example, the default position may be displayed as 0, and another content displayed in the interface may be similar to that displayed in the interface shown in FIG. 8(a). Details are not described herein again. The default position may be understood as a shortest distance between the sound source and the user. For example, the shortest distance may be 0.2 meters, and the distance between the sound source and the user may range from 0.2 meters to 20 meters.

In the interface shown in FIG. 8(b), when the terminal device receives that the user slides the progress bar to enable that an adjusted distance between the sound source and the user increases by 10 meters, the terminal device may obtain a corresponding BRIR direct-to-reverberant ratio adjustment parameter (and/or the echo density) when the distance between the sound source and the user increases by 10 meters, and display the interface shown in FIG. 8(c), so that the terminal device may input the corresponding BRIR direct-to-reverberant ratio adjustment parameter (and/or the echo density) when the distance between the user increases by 10 meters into the neural network model described in the step shown in S506, to adjust the neural network model. In the interface shown in FIG. 8(c), the interface may include: a progress bar 803. The progress bar 803 indicates that the distance between the sound source and the user increases by 10 meters, and 10 may be displayed around the progress bar 803.

It may be understood that, the progress bar may be set to a plurality of fixed positions, and any fixed position may correspond to the change in the distance between the sound source and the user. For example, 0, 5, 10, 15, and 20 may be set in the progress bar.

In a possible implementation, when the terminal device receives the trigger operation of the user for any rendering type in the interface shown in FIG. 7B, the terminal device may display a progress bar corresponding to any rendering type, where the progress bar has the same function as the progress bar 802 in the interface shown in FIG. 8(b). Details are not described herein again.

In a possible implementation, the distance between the sound source and the user may further have a correspondence with the BRIR direct-to-reverberant ratio adjustment parameter, the echo density, the target spectral peaks and valleys, the room size, and/or the reverberation time in the second target parameter. A process of determining the second target parameter based on the distance between the sound source and the user is not described herein again.

In another implementation, the terminal device may support adjusting the distance between the sound source and the user by inputting the distance value between the sound source and the user through the text box.

For example, FIG. 9 is a schematic diagram of yet another interface of enabling spatial audio rendering according to an embodiment of this application.

The terminal device displays an interface shown in FIG. 9(a). The content displayed in the interface may be similar to the interface shown in FIG. 7B, and details are not described herein again. In the interface shown in FIG. 9(a), when the terminal device receives the trigger operation of the user for the control 901 corresponding to the concert hall rendering type, the terminal device may display the interface shown in FIG. 9(b). In the interface shown in FIG. 9(b), the interface may include: a text box 902 for inputting the distance between the sound source and the user. The text box 902 may be displayed as 0 by default, and another content displayed in the interface may be similar to that displayed in the interface shown in FIG. 9(a). Details are not described herein again.

In the interface shown in FIG. 9(b), when the terminal device receives the operation of the user inputting a value, for example, a value 10, into the text box 902, the terminal device may display the interface shown in FIG. 9(c), and the terminal device obtains the BRIR direct-to-reverberant ratio adjustment parameter (and/or the echo density) corresponding to the inputted value 10. In the interface shown in FIG. 9(c), the interface may include: a text box 903. The text box 903 may be displayed as 10.

In a possible implementation, a distance range that can be inputted in the text box 903 may be 0 to 20. The interface shown in FIG. 9(c) may further display indication information indicating the distance range that can be inputted in the text box. This is not limited in the embodiments of this application.

Based on the embodiment corresponding to FIG. 8 and the embodiment corresponding to FIG. 9, the user can not only simulate listening to audio in different spaces, but also flexibly adjust a distance between the audio and the user, which further improves an auditory experience of the user when listening to audio.

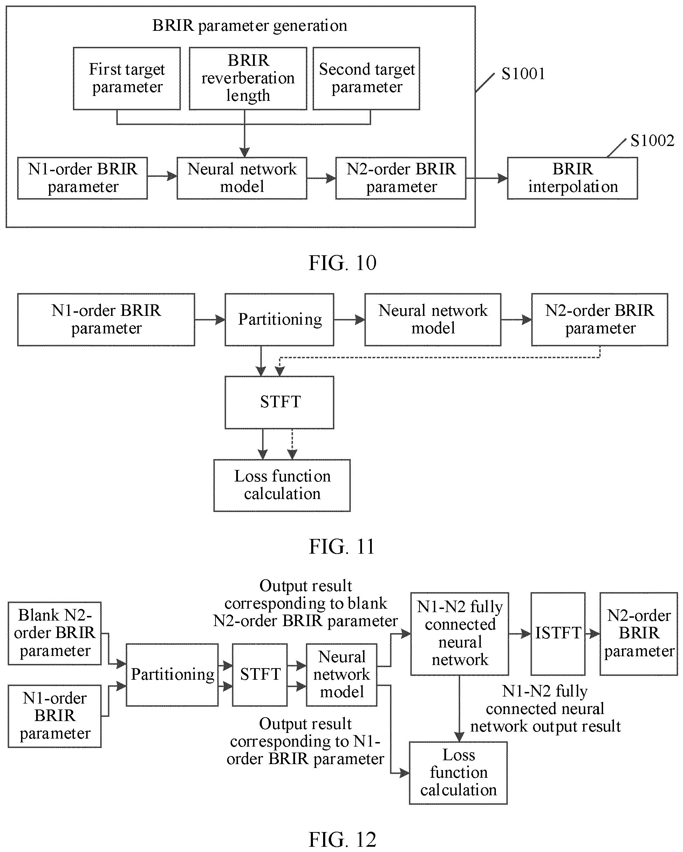

Based on the embodiment corresponding to FIG. 5, in a possible implementation, in the step shown in S506, for a method for the terminal device to output the N2-order BRIR parameter by using the neural network model, reference may be made to the embodiments corresponding to FIG. 10 and FIG. 11.

For example, FIG. 10 is a schematic flowchart of generating a BRIR parameter according to an embodiment of this application. As shown in FIG. 10, a method of generating the BRIR parameter may include the following steps: S1001: A terminal device inputs an N1-order BRIR parameter, a first target parameter, a BRIR reverberation length, and a second target parameter into a neural network model to output an N2-order BRIR parameter.

The BRIR reverberation length may indicate an order of the BRIR parameter. For example, the BRIR reverberation length may be a preset value. For example, the BRIR reverberation length may be N2.

In this embodiment of this application, the first target parameter, the BRIR reverberation length, and the second target parameter may be used to adjust the N1-order BRIR parameter in the neural network model. For a manner of obtaining the first target parameter, reference may be made to an embodiment corresponding to FIG. 6, and for a manner of obtaining the second target parameter, reference may be made to embodiments corresponding to FIG. 7A, FIG. 7B, and FIG. 7C to FIG. 9.

The neural network model may be: a convolutional recurrent neural network (convolutional recurrent neural network, CRNN) model, a deep convolutional recurrent neural network (deep convolutional recurrent neural network, DCNRR) model, a transformer model, an equal sequence to sequence generation model, and the like. This is not limited in the embodiments of this application.

For example, FIG. 11 is a schematic structural diagram of a neural network model according to an embodiment of this application.

As shown in FIG. 11, the terminal device may partition the N1-order BRIR parameter. For example, the terminal device may divide the N1-order BRIR parameter into a direct response region, an early reflection region, and a late reverberation region based on a size of space and/or the reverberation time. Short-time fourier transform (short-time fourier transform, STFT) processing is performed on the N1-order BRIR parameters corresponding to each region to obtain the STFT-processed N1-order BRIR parameters corresponding to each region.

The terminal device inputs the N1-order BRIR parameters corresponding to each region into the neural network model to obtain the N2-order BRIR parameters corresponding to each region; and STFT processing is performed on the N2-order BRIR parameters corresponding to each region to obtain STFT-processed N2-order BRIR parameters corresponding to each region.

Further, the terminal device calculates a loss function by using the STFT-processed N1-order BRIR parameter corresponding to each region and the STFT-processed N2-order BRIR parameter corresponding to each region, and outputs a final N2-order BRIR parameter when the loss function converges.

In a possible implementation, an input of the neural network model may further be: the N1-order BRIR parameter, a blank N2-order BRIR parameter, the first target parameter, the BRIR reverberation length, and the second target parameter. In a scenario in which the terminal device inputs the N1-order BRIR parameter and the blank N2-order BRIR parameter into the neural network model, the neural network model library may further be: a generative adversarial network (generative adversarial network, GAN) model, a variational auto-encoder (variational auto-encoder, VAE) model, or the like. This is not limited in the embodiments of this application.

For example, FIG. 12 is a schematic structural diagram of another neural network model according to an embodiment of this application.

As shown in FIG. 12, the terminal device may respectively perform partitioning processing on the blank N2-order BRIR parameter and the N1-order BRIR parameter, and perform STFT processing on the two parameters after partitioning processing, and the two parameters after partitioning processing are inputted into the neural network model to obtain an output result corresponding to the blank N2-order BRIR parameter and an output result corresponding to the N1-order BRIR parameter.

The terminal device inputs the output result corresponding to the blank N2-order BRIR parameter into an N1-N2-order fully connected neural network to obtain an N1-N2 neural network output result. The N1-N2 order fully connected neural network is used for reducing an order of the blank N2-order BRIR parameter. For example, an order of the output result corresponding to the blank N2-order BRIR parameter is reduced from N1 to N2.

Further, the terminal device may calculate the loss function by using an output result of the N1-N2 fully connected neural network and an output result corresponding to the N1-order BRIR parameter, and when the loss function converges, the terminal device performs inverse short-time fourier transform (inverse short-time fourier transform, ISTFT) on the output result of the N1-N2 fully connected neural network to obtain a final N2-order BRIR parameter.

S 1002: The terminal device processes an N2-order BRIR parameter with a resolution of M1 into an N2-order BRIR parameter with a resolution of M2 by using an interpolation method.

In the embodiments of this application, M1 is greater than M2. The resolution of the BRIR parameter may be used for indicating BRIR parameters corresponding to different angles.

For example, when the resolution of the BRIR parameter is 5°, one N2-order BRIR parameter may be set for every 5°, and 360° may correspond to 72 N2-order BRIR parameters, for example, the terminal device may respectively set N2-order BRIR parameters at 0°, 5°, 10°, 15°, and 20°.

Alternatively, when the resolution of the BRIR parameter is 1°, one N2-order BRIR parameter may be set for every 1°, and 360° may correspond to 360 N2-order BRIR parameters.

For example, the interpolation method may include: methods such as triangular interpolation or linear interpolation. This is not limited in the embodiments of this application.

It may be understood that, the terminal device may increase a quantity of BRIR parameters by interpolating the BRIR parameter, so that the terminal device may match the suitable BRIR parameter for the user at different rotation angles, thereby improving accuracy of audio processing.

Further, the terminal device may match the N2-order BRIR parameter corresponding to the head rotation angle based on the head rotation angle, so that the audio signal may be adjusted at any time based on the change of the rotation angle of the user, which allows the user to obtain a good audio listening experience.

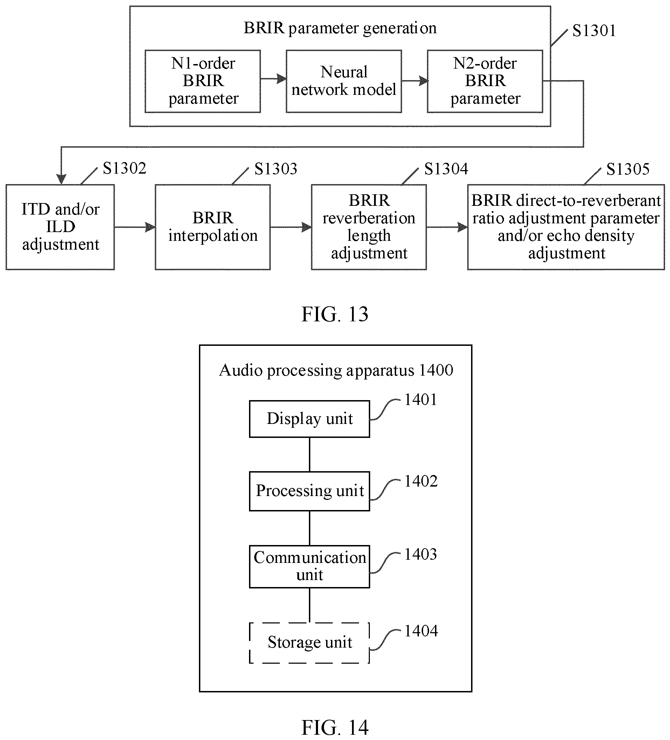

For example, FIG. 13 is another schematic flowchart of generating a BRIR parameter according to an embodiment of this application. As shown in FIG. 13, the method of generating the BRIR parameter may include the following steps:

S1301: The terminal device inputs the N1-order BRIR parameter into the neural network model to output the N2-order BRIR parameter.

In a possible implementation, the terminal device may further input the N1-order BRIR parameter and the blank N2-order BRIR parameter into the neural network model, to output the N2-order BRIR parameter.

S 1302: The terminal device adjusts the N2-order BRIR parameter by using ITD and/or ILD to obtain the N2-order BRIR parameter adjusted by ITD and/ILD.

The ITD and the ILD may be preset by the terminal device, or the ITD and the ILD may be obtained by the terminal device based on the embodiment corresponding to FIG. 6. This is not limited in the embodiments of this application.

In a possible implementation, the terminal device may further adjust the N2-order BRIR parameter by using ITD, ILD and/or IC to obtain the N2-order BRIR parameters adjusted by ITD and/ILD.

S1303: The terminal device processes the N2-order BRIR parameter with the resolution of M1 and the N2-order BRIR parameter adjusted by ITD and/ILD into the N2-order BRIR parameter with the resolution of M2.

S1304: The terminal device adjusts the N2-order BRIR parameter with the resolution of M2 based on a preset BRIR reverberation length to obtain an N3-order BRIR parameter.

The preset BRIR reverberation length may be N3, and N3 is smaller than N2.

S1305: The terminal device adjusts the N3-order BRIR parameter by using the BRIR direct-to-reverberant ratio adjustment parameter and/or the echo density to obtain a final N3-order BRIR parameter.

In a possible implementation, the terminal device may further adjust the N3-order BRIR parameter by using the BRIR direct-to-reverberant ratio adjustment parameter, the echo density, the target spectrum peaks and valleys, the room size and/or the reverberation time, to obtain the final N3-order BRIR parameter.

Based on the description in the embodiment corresponding to FIG. 13, it may alternatively be understood that, the terminal device adjusts the N2-order BRIR parameter outputted by the neural network model by using one or more parameters of the first target parameter and the second target parameter, to obtain a final BRIR parameter. An order of the final BRIR parameter may be N2 or N3. This is not limited in the embodiments of this application.

The BRIR direct-to-reverberant ratio adjustment parameter, the echo density, the target spectral peaks and valleys, the room size and/or the reverberation time may be preset for the terminal device, or may further be obtained by the terminal device based on the embodiments corresponding to FIG. 7A, FIG. 7B, and FIG. 7C to FIG. 9. This is not limited in the embodiments of this application.

Based on this, the terminal device can not only generate the BRIR parameter related to user requirements in the neural network model based on the embodiment corresponding to FIG. 10, but also generate the BRIR parameter related to user requirements through a plurality of times of adjustment to the BRIR parameter outputted by the neural network model based on the embodiment corresponding to FIG. 13. A manner of generating the BRIR parameter is not specifically limited in the embodiments of this application.

Based on the embodiment corresponding to FIG. 10, the loss function of the neural network module described in the embodiment corresponding to FIG. 10 may be related to one or more of the following parameters, for example, TD, ILD, IC, BRIR direct-to-reverberant ratio parameters, the echo density, the specific spectral peaks and valleys, the subjective loudness, and the value corresponding to the bark spectrum.

For example, predicted BRIR parameters after STFT processing and real BRIR parameters after STFT processing may be obtained, corresponding to ITD, ILD, and IC respectively.

$$F_1 = |(E_{1\text{left}} - E_{1\text{right}}) - (E_{2\text{left}} - E_{2\text{right}})|$$

$E_{1\text{left}} - E_{1\text{right}}$ may be the ILD corresponding to the real BRIR parameter after STFT processing, and $E_{2\text{left}} - E_{2\text{right}}$ may be the ILD corresponding to the predicted BRIR parameter after STFT processing.

$$F_2 = |(T_{1\text{left}} - T_{1\text{right}}) - (T_{2\text{left}} - T_{2\text{right}})|$$

$T_{1\text{left}} - T_{1\text{right}}$ may be the ITD corresponding to the real BRIR parameter after STFT processing, and $T_{2\text{left}} - T_{2\text{right}}$ may be the ITD corresponding to the predicted BRIR parameter after STFT processing.

$$F_3 = |\Gamma_1 - \Gamma_2|$$

$\Gamma_1$ may be the IC corresponding to the real BRIR parameter after STFT processing, and $\Gamma_2$ may be the IC corresponding to the predicted BRIR parameter after STFT processing.

When $\lambda$ is a quantity of frames and $\mu$ is a frequency point, a definition of IC may be:

$$\Gamma_{XIXR}(\lambda, \mu) = \frac{P_{XIXR}(\lambda, \mu)}{\sqrt{P_{XIXR}(\lambda, \mu)P_{XRXR}(\lambda, \mu)}}$$

$P_{XIXI}(\lambda, \mu)$ may be an autopower spectrum of $XI(\lambda, \mu)$, $P_{XRXR}(\lambda, \mu)$ may be an autopower spectrum of $XR(\lambda, \mu)$, and $P_{XIXR}(\lambda, \mu)$ may be a mutual power spectrum between $XI(\lambda, \mu)$ and $XR(\lambda, \mu)$.

$$P_{XIXI}(\lambda, \mu) = \gamma P_{XIXI}(\lambda, \mu) + (1 - \gamma)|XI(\lambda, \mu)|^2$$

$$P_{XIXR}(\lambda, \mu) = \gamma P_{XIXR}(\lambda, \mu) + (1 - \gamma)XI(\lambda, \mu)XR^*(\lambda, \mu)$$

* represents conjugate calculation, $\gamma$ may be a smoothing factor between adjacent frames.

Further, the loss function may be determined as:

$$\text{Loss}_1 = \alpha_1 \times F_1 + \alpha_2 \times F_2 + \alpha_3 \times F_3$$

$\alpha_1$, $\alpha_2$, and $\alpha_3$ may be preset parameters.

In a possible implementation, one or more of $F_1$, $F_2$, and $F_3$ may further be independently used as the loss function of the neural network model. This is not limited in the embodiments of this application.

For example, the predicted BRIR parameters after STFT processing in different regions after partitioning, and the real BRIR parameters after STFT processing in different regions may be obtained. Further, a difference $F_4$ between direct-to-reverberant ratios (where the direct-to-reverberant ratio may be (a sum of an energy of late reverberation and early reflection)/an energy of a direct response), a difference $F_5$ between echo densities (where the echo density may be a ratio of an energy of late reverberation to an entire energy), and a difference $F_6$ between specific spectral peaks and valleys (where the specific spectral peaks and valleys may be spectral peaks and valleys in a preset frequency band) are calculated.

$$F_4 = |(E_{early-rev1} + E_{late-rev1})/E_{dir1} - (E_{early-rev2} + E_{late-rev2})/E_{dir1}|$$

$(_{arly-rev1} + E_{late-rev1})/E_{dir1}$ may be a direct-to-reverberant ratio corresponding to the real BRIR parameters after STFT processing in different regions, and $(E_{early-rev2} + E_{late-rev2})/E_{dir2}$ may be a direct-to-reverberant ratio corresponding to the predicted BRIR parameters after STFT processing in different regions.

$$F_5 = |E_{late-rev1}/E_{dir1} - E_{late-rev2}/E_{dir2}|$$

$E_{late-re1}/E_{dir1}$ may be the echo density corresponding to the real BRIR parameters after STFT processing in different regions, and $E_{late-rev2}/E_{dir2}$ may be the echo density corresponding to the predicted BRIR parameters after STFT processing in different regions.

$$F_6 = |(E_{1top} - E_{1bottom}) - (E_{2top} - E_{2bottom})|$$

$E_{1top}-E_{1bottom}$ may be a difference between peaks and valleys corresponding to the real BRIR parameters after STFT processing in different regions, and $E_{2top} -E_{2bottom}$ may be a difference between spectral peaks and valleys corresponding to the predicted IR parameters after STFT processing in different regions.

$$\text{Loss}_2 = \alpha_4 \times F_4 + \alpha_5 \times F_5 + \alpha_6 \times F_6$$

$\alpha_4$, $\alpha_5$, and $\alpha_6$ may be preset parameters.

In a possible implementation, one or more of $F_4$, $F_5$, and $F_6$ may further be independently used as the loss function of the neural network model. This is not limited in the embodiments of this application.

For example, subjective loudness corresponding to the predicted BRIR parameters after STFT processing in different regions after partitioning, and subjective loudness corresponding to the real BRIR parameters after STFT processing in different regions may be obtained.

$$Loss_3 = |LK_1 - LK_2|$$

$LK_1$ may be the subjective loudness corresponding to the real BRIR parameters after STFT processing in different regions; and $LK_2$ may be the subjective loudness corresponding to the predicted BRIR parameters after STFT processing in different regions.

Specifically, the subjective loudness LK of any signal may be:

$$LK = -0.0691 + 10\log_{10}(L+R)$$

L may be an average value calculated by summing the squares of results of the left channel audio signal processed by a plurality of filters respectively, and R may be understood as an average value calculated by summing the squares of results of the right channel audio signal processed by the plurality of filters.

For example, bark spectrum values corresponding to the predicted BRIR parameters after STFT processing in different regions after partitioning, and bark spectrum values corresponding to the real BRIR parameters after STFT processing in different regions may be obtained.

$$Loss_4 = |(E_{1B\_dir} + E_{1B\_early\_rev} + E_{1B\_late\_rev}) - (E_{2B\_dir} + E_{2B\_early\_rev} + E_{2B\_late\_rev})|$$

$E_{1B\_dir} + E_{1B\_early\_rev} + E_{1B\_late\_rev}$ may be bark spectrum values corresponding to the real BRIR parameters after STFT processing in different regions, and $E_{2B\_dir} + E_{2B\_early\_rev} + E_{2B\_late\_rev}$ may be bark spectrum values corresponding to the predicted BRIR parameters after STFT processing in different regions.

Any bark spectrum value B may be:

$$B = 13\tan^{-1}\left(\frac{0.76f}{1000}\right) + 3.5\tan^{-1}\left(\frac{f}{7500}\right)^2$$

f may be understood as a frequency of a signal.

Further, the terminal device may further determine a loss function $Loss_{total}$ of the neural network model as:

$$Loss_{total} = \beta_1 \times Loss_1 + \beta_2 \times Loss_2 + \beta_3 \times Loss_3 + \beta_4 \times Loss_4$$

$\beta_1$, $\beta_2$, $\beta_3$, and $\beta_4$ may all be preset parameters.

It may be understood that, the loss function in the neural network model may further be related to another parameter. This is not limited in the embodiments of this application.

It may be understood that, the interface described in this embodiment of this application is merely an example, which does not constitute a limitation on this embodiment of this application.

The method provided in the embodiments of this application is described above with reference to FIG. 5 to FIG. 13, and an apparatus for performing the above method provided in the embodiments of this application is described below. As shown in FIG. 14, FIG. 14 is a schematic structural diagram of an audio processing apparatus according to an embodiment of this application. The audio processing apparatus may be the terminal device in the embodiments of this application, or may be a chip or a chip system in the terminal device.

As shown in FIG. 14, an audio processing apparatus 1400 may be applied to a communication device, a circuit, a hardware component, or a chip. The audio processing apparatus includes: a display unit 1401, a processing unit 1402, and a communication unit 1403, where the display unit 1401 is configured to support the display steps performed by the audio processing apparatus 1400; the processing unit 1402 is configured to support the information processing steps performed by the audio processing apparatus 1400; and the communication unit 1403 is configured to indicate the audio processing apparatus 1400 to perform steps such as sending and receiving data. The communication unit 1403 may be an input or output interface, a pin, a circuit, or the like.

Specifically, an embodiment of this application provides an audio processing apparatus 1400. The terminal device establishes a communication connection to the headset, and the method includes: a display unit 1401, configured to display a first interface, where the first interface includes a plurality of controls for selecting a head feature; a processing unit 1402, configured to receive a first operation for a first control in the plurality of controls, where the processing unit 1402 is further configured to obtain a first target parameter corresponding to the first control in response to the first operation, where the first target parameter includes one or more of the following: an interaural time difference, an interaural level difference, or an inter-aural coherence; the processing unit 1402 is further configured to obtain a first audio signal; the processing unit 1402 is further configured to process the first audio signal by using the first target parameter to obtain a second audio signal; and a communication unit 1403, configured to send the second audio signal to the headset.

In a possible embodiment, the audio processing apparatus may further include a storage unit 1404. The processing unit 1402 is connected to the storage unit 1404 through a bus. The storage unit 1404 may include one or more memories, and the memory may be one or more devices or components in a circuit that are used to store a program or data. The storage unit 1404 may exist independently, and is connected to the processing unit 1402 included by the audio processing apparatus by using a communication line. The storage unit 1404 may alternatively be integrated with the processing unit 1402.

The storage unit 1404 may store computer executable instructions of the method of the terminal device, so that the processing unit 1402 performs the method in the foregoing embodiments. The storage unit 1404 may be a register, a cache, a RAM, or the like, and the storage unit 1404 may be integrated with the processing unit 1402. The storage unit 1404 may be a read-only memory (read-only memory, ROM) or another type of static storage device that may store static information and instructions, and the storage unit 1404 may be independent of the processing unit 1402.

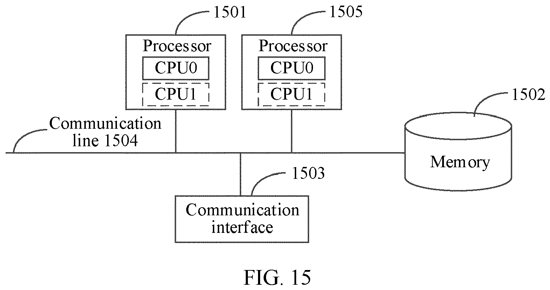

FIG. 15 is a schematic diagram of a hardware structure of another terminal device according to an embodiment of this application. As shown in FIG. 15, the terminal device includes a processor 1501, a communication line 1504, and at least one communication interface (exemplarily, a communication interface 1503 is used as an example for description in FIG. 15).

The processor 1501 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 1504 may include a circuit configured to transmit information between the foregoing components.

The communication interface 1503 uses any apparatus of a transceiver type to communicate with another device or a communication network such as an Ethernet, wireless local area networks (wireless local area networks, WLAN), and the like.

Possibly, the terminal device may further include a memory 1502.

The memory 1502 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor by using the communication line 1504. The memory may alternatively be integrated with the processor.

The memory 1502 is configured to store computer executable instructions for performing the solutions of this application, and is controlled and executed by the processor 1501. The processor 1501 is configured to execute the computer executable instructions stored in the memory 1502 to implement the method provided in the embodiments of this application.

Possibly, the computer executable instructions in this embodiment of this application may also be referred to as application program code. This is not specifically limited in this embodiment of this application.

During specific implementation, in an embodiment, the processor 1501 may include one or more CPUs, for example, a CPU0 and a CPU1 in FIG. 15.

During specific implementation, in an embodiment, the terminal device may include a plurality of processors, for example, a processor 1501 and a processor 1505 in FIG. 15. Each of these processors may be a single-core (single-CPU) processor, or may be a multi-core (multi-CPU) processor. The processor herein may be one or more devices or circuits, and/or a processing core configured to process data (for example, computer program instructions).

The computer program product includes one or more computer instructions. When the computer program instructions are loaded and executed on the computer, all or some of the procedures or functions according to the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

An embodiment of this application further provides a computer-readable storage medium. The method described in the foregoing embodiments may be fully or partially implemented by software, hardware, firmware, or any combination thereof. The computer readable medium may include a computer storage medium and a communication medium, and may further include any medium that can transmit a computer program from one place to another. The storage medium may be any target medium accessible by a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, wherein the magnetic disk generally reproduces data in a magnetic manner, and the optical disc reproduces data optically by using laser.

The foregoing combination should also be included in the scope of the computer readable medium. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. An audio processing method, applied to a terminal device, the terminal device establishing a communication connection to a headset, and the method comprising:

   displaying, by the terminal device, a first interface, wherein the first interface comprises a plurality of controls for selecting a head feature;
   receiving, by the terminal device, a first operation for a first control in the plurality of controls;
   obtaining, by the terminal device, a first target parameter corresponding to the first control in response to the first operation, wherein the first target parameter comprises one or more of the following: an interaural time difference, an interaural level difference, or an inter-aural coherence;
   obtaining, by the terminal device, a first audio signal;
   processing, by the terminal device, the first audio signal by using the first target parameter to obtain a second audio signal; and
   sending, by the terminal device, the second audio signal to the headset.

2. The method according to claim 1, wherein the first interface further comprises: a second control for selecting a spatial rendering type, and the method further comprises:

   receiving, by the terminal device, a second operation for the second control; and
   obtaining, by the terminal device, a second target parameter corresponding to the second control in response to the second operation, wherein the second target parameter comprises one or more of the following: a BRIR direct-to-reverberant ratio adjustment parameter, echo density, target spectral peaks and valleys, a room size, or a reverberation time; and
   the processing, by the terminal device, the first audio signal by using the first target parameter comprises:

processing, by the terminal device, the first audio signal by using the first target parameter and the second target parameter to obtain the second audio signal.

3. The method according to claim 2, wherein the obtaining, by the terminal device, a second target parameter corresponding to the second control in response to the second operation comprises:

displaying, by the terminal device, a progress bar corresponding to the second control in response to the second operation, wherein the progress bar is used for adjusting a distance between the second audio signal and the terminal device when the headset plays the second audio signal;
receiving, by the terminal device, a third operation for the progress bar; and
obtaining, by the terminal device, the second target parameter corresponding to a target position of the progress bar in response to the third operation.

4. The method according to claim 2 or 3, wherein the method further comprises:

displaying, by the terminal device, a second interface, wherein the second interface comprises a third control for performing spatial rendering on the first audio signal; and
receiving, by the terminal device, a fourth operation for the third control; and
the displaying, by the terminal device, a first interface comprises: displaying, by the terminal device, the first interface in response to the fourth operation.

5. The method according to claim 4, wherein the method further comprises:

inputting, by the terminal device, a first binaural room impulse response BRIR parameter and the first target parameter into a first target neural network model to output a second BRIR parameter, wherein an order of the first BRIR parameter is N1, an order of the second BRIR parameter is N2, and N1 is greater than N2; and a loss function of the first target neural network model is related to one or more parameters in the first target parameter; and
the processing, by the terminal device, the first audio signal by using the first target parameter comprises: processing, by the terminal device, the first audio signal by using the second BRIR parameter.

6. The method according to claim 5, wherein the inputting, by the terminal device, a first BRIR parameter and the first target parameter into a first target neural network model to output a second BRIR parameter comprises:
inputting, by the terminal device, the first BRIR parameter, the first target parameter, and the second target parameter into the first target neural network model to output the second BRIR parameter, wherein the loss function is related to one or more parameters in a target parameter; and the target parameter comprises the first target parameter and the second target parameter.

7. The method according to claim 6, wherein the target parameter further comprises: subjective loudness, or a value corresponding to a bark spectrum.

8. The method according to claim 4, wherein the method further comprises:

inputting, by the terminal device, a first BRIR parameter into a second target neural network model to output a third BRIR parameter, wherein an order of the first BRIR parameter is N1, an order of the third BRIR parameter is N2, and N1 is greater than N2; and
adjusting, by the terminal device, the third BRIR parameter by using one or more parameters in the first target parameter to obtain a second BRIR parameter, wherein an order of the second BRIR parameter is N2; and
the processing, by the terminal device, the first audio signal by using the first target parameter comprises: processing, by the terminal device, the first audio signal by using the second BRIR parameter.

9. The method according to claim 8, wherein the adjusting, by the terminal device, the third BRIR parameter by using one or more parameters in the first target parameter to obtain a second BRIR parameter comprises:

adjusting, by the terminal device, the third BRIR parameter by using the one or more parameters in the first target parameter to obtain a fourth BRIR parameter, wherein an order of the fourth BRIR parameter is N2; and
adjusting, by the terminal device, the fourth BRIR parameter by using one or more parameters in the second target parameter to obtain the second BRIR parameter.

10. The method according to claim 5 or 8, wherein the processing, by the terminal device, the first audio signal by using the second BRIR parameter comprises:

> obtaining, by the terminal device, a target rotation angle from the headset, wherein the target rotation angle is a rotation angle detected by the headset when the headset is worn;
> obtaining, by the terminal device, a target BRIR parameter corresponding to the target rotation angle from the second BRIR parameter, wherein an order of the target BRIR parameter is N2; and
> processing, by the terminal device, the first audio signal by using the target BRIR parameter.

11. The method according to claim 10, wherein the second interface further comprises: a fourth control for adjusting the second audio signal along with rotation of the headset when the second audio signal is played, and the method further comprises:

> receiving, by the terminal device, a fifth operation for the fourth control; and
> sending, by the terminal device, indication information for obtaining the target rotation angle to the headset in response to the fifth operation; and
> the obtaining, by terminal device, a target rotation angle from the headset comprises: obtaining, by terminal device, the target rotation angle from the headset based on the indication information.

12. A terminal device, comprising a memory, a processor, and a computer program stored in the memory and executable on the processor, wherein when the computer program is executed by the processor, the terminal device is caused to perform the method according to any one of claims 1 to 11.

13. A computer-readable storage medium, storing a computer program, wherein when the computer program is executed by a processor, a computer is caused to perform the method according to any one of claims 1 to 11.

14. A computer program product, comprising a computer program, wherein when the computer program is run, a computer is caused to perform the method according to any one of claims 1 to 11.

102

101

00:01          04:10

FIG. 1

EP 4 462 823 A1

Antenna 1  Terminal device  Antenna 2

Mobile communication module
2G/3G/4G/5G
[150]

Wireless communication module
BT/WLAN/GNSS/NFC/IR/FM
[160]

Speaker
[170A]

Phone
receiver
[170B]

Audio
module

[170]

Microphone
[170C]

Headset
jack [170D]

External memory
interface [120]

Processor

[110]

Display screens 1 to
N [194]

Cameras 1 to N
[193]

Indicator [192]

Key [190]

Internal memory
[121]

Sensor module
[180]

USB interface [130]

Charging
input

Charging
management
module
[140]

Power
management
module
[141]

FIG. 2

24

FIG. 3

FIG. 4

| Terminal device | | Headset |
|---|---|---|

S501. The terminal device establishes a communication connection to the headset

S502. When the terminal device receives an operation that a user enables a spatial audio rendering switch in a headset setting interface, the terminal device displays a plurality of controls for selecting a target head feature in a spatial audio rendering function

S503. When the terminal device receives an operation for a control corresponding to the target head feature, the terminal device obtains a first target parameter

S504. Indication information used for obtaining a head rotation angle

S505. The head rotation angle

S506. The terminal device obtains an N2-order BRIR parameter based on an N1-order BRIR parameter and the first target parameter

S507. The terminal device processes initial audio data by using the N2-order BRIR parameter and the head rotation angle to obtain a target audio signal

S508. The target audio signal

S509. The headset plays the target audio signal through a speaker

FIG. 5

FIG. 6

FIG. 7A

Headset

| | | | |
|---|---|---|---|
| Head feature 605 | Head feature 606 | Head feature 607 | Head feature 608 |
| Head feature 609 | Head feature 610 | Head feature 611 | Head feature 612 |

Tip: If you do not select any head feature, a default head feature is configured for you

Please select a spatial rendering type

Concert hall

Indoor

Sea                           701

Forest                        702

Mountain                      703

Indoor

Others

Tip: If you do not select a spatial rendering type, a default spatial rendering type is configured for you

FIG. 7B

CONT. FROM
FIG. 7B

CONT.
FROM
FIG. 7A

Headset

Head
feature 605

Head
feature 606

Head
feature 607

Head
feature 608

Head
feature 609

Head
feature 610

Head
feature 611

Head
feature 612

Tip: If you do not select any head feature, a default
head feature is configured for you

Please select a spatial rendering type

Concert hall

Outdoor

Indoor

Church

Stadium

Bedroom

Others

Tip: If you do not select a spatial rendering type, a
default spatial rendering type is configured for you

FIG. 7C

FIG. 8

FIG. 9

BRIR parameter generation

| First target parameter | BRIR reverberation length | Second target parameter |
|---|---|---|

S1001

| N1-order BRIR parameter | → | Neural network model | → | N2-order BRIR parameter | → | BRIR interpolation |

S1002

FIG. 10

| N1-order BRIR parameter | → | Partitioning | → | Neural network model | → | N2-order BRIR parameter |

STFT

Loss function calculation

FIG. 11

| Blank N2-order BRIR parameter |

| N1-order BRIR parameter |

→ Partitioning → STFT → Neural network model

Output result corresponding to blank N2-order BRIR parameter

Output result corresponding to N1-order BRIR parameter

N1-N2 fully connected neural network → ISTFT → N2-order BRIR parameter

N1-N2 fully connected neural network output result

Loss function calculation

FIG. 12

BRIR parameter generation                          S1301

| N1-order BRIR parameter | → | Neural network model | → | N2-order BRIR parameter |

S1302                    S1303                    S1304                    S1305

| ITD and/or ILD adjustment | → | BRIR interpolation | → | BRIR reverberation length adjustment | → | BRIR direct-to-reverberant ratio adjustment parameter and/or echo density adjustment |

FIG. 13

Audio processing apparatus 1400

| Display unit | 1401 |
| Processing unit | 1402 |
| Communication unit | 1403 |
| Storage unit | 1404 |

FIG. 14

FIG. 15

**INTERNATIONAL SEARCH REPORT**

| International application No. |
| --- |
| **PCT/CN2023/102794** |

| A. | CLASSIFICATION OF SUBJECT MATTER |
| --- | --- |

H04S7/00(2006.01)i

According to International Patent Classification (IPC) or to both national classification and IPC

| B. | FIELDS SEARCHED |
| --- | --- |

Minimum documentation searched (classification system followed by classification symbols)

IPC:H04S

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 耳机, 音频, 终端, 手机, 界面, 屏幕, 显示屏, 头部, 控件, 双耳房间脉冲响应, 参数, 渲染, 回声密度, 混响, audio, process+, phone, terminal, display?, BRIR, sound, head, user, binaural room impulse response, earphone

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116095595 A (HONOR DEVICE CO., LTD.) 09 May 2023 (2023-05-09) description, paragraphs [0005]-[0256], and figures 1-15 | 1-14 |
| X | US 2012201405 A1 (SLAMKA MILAN et al.) 09 August 2012 (2012-08-09) description, paragraphs [0017]-[0117], and figures 1-11 | 1, 12-14 |
| Y | US 2012201405 A1 (SLAMKA MILAN et al.) 09 August 2012 (2012-08-09) description, paragraphs [0017]-[0117], and figures 1-11 | 2-4, 12-14 |
| Y | CN 109644314 A (APPLE INC.) 16 April 2019 (2019-04-16) description, paragraphs [0003]-[0025], and figures 1-4 | 2-4, 12-14 |
| A | CN 112492445 A (BEIJING SOUNDPLUS TECHNOLOGY CO., LTD.) 12 March 2021 (2021-03-12) entire document | 1-14 |
| A | US 2019014431 A1 (CREATIVE TECH LTD.) 10 January 2019 (2019-01-10) entire document | 1-14 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **21 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/102794**

| Patent document cited in search report | | | Publication date (day/month/year) | Patent family member(s) | | | Publication date (day/month/year) |
|---|---|---|---|---|---|---|---|
| CN | 116095595 | A | 09 May 2023 | None | | | |
| US | 2012201405 | A1 | 09 August 2012 | US | 8270616 | B2 | 18 September 2012 |
| CN | 109644314 | A | 16 April 2019 | US | 2018091920 | A1 | 29 March 2018 |
| | | | | US | 10187740 | B2 | 22 January 2019 |
| | | | | WO | 2018057176 | A1 | 29 March 2018 |
| CN | 112492445 | A | 12 March 2021 | None | | | |
| US | 2019014431 | A1 | 10 January 2019 | US | 2021014629 | A1 | 14 January 2021 |
| | | | | US | 11601775 | B2 | 07 March 2023 |
| | | | | US | 10805757 | B2 | 13 October 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211001656